# EUROPÄISCHE PATENTSCHRIFT

(11) **EP 3 036 087 B1**
(45) Veröffentlichungstag und Bekanntmachung des Hinweises auf die Patenterteilung: **21.12.2016**
(21) Anmeldenummer: 15766065.5
(22) Anmeldetag: 25.08.2015
(51) Int. Cl.: B29C 67/00, B22F 3/105, B29C 31/02, B65D 90/54, F16K 7/07, B33Y 10/00, B33Y 30/00

(54) **BESCHICHTERANORDNUNG FÜR EINEN 3D-DRUCKER**
COATING ARRANGEMENT FOR A 3D PRINTER
SYSTÈME DE REVÊTEMENT POUR IMPRIMANTE 3D

(30) Priorität: 29.08.2014 DE 102014112454
(43) Veröffentlichungstag der Anmeldung: 29.06.2016
(73) Patentinhaber: ExOne GmbH, 86368 Gersthofen (DE)
(72) Erfinder: HÖCHSMANN, Rainer, 86863 Langenneufnach (DE); MÜLLER, Alexander, 86420 Diedorf-Vogelsang (DE); KLAUA, Sven, 86161 Augsburg (DE)
(74) Vertreter: Viering, Jentschura & Partner mbB Patent- und Rechtsanwälte
(86) Internationale Anmeldenummer: PCT/EP2015/069470
(87) Internationale Veröffentlichungsnummer: WO 2016/030391

(56) Entgegenhaltungen:
- EP-A1- 1 234 625
- DE-A1-102009 056 689
- FR-A1- 2 285 558

## Beschreibung

Die vorliegende Erfindung betrifft eine Beschichteranordnung für einen 3D-Drucker, einen 3D-Drucker mit solch einer Beschichteranordnung, verschiedene generative Herstellungsverfahren sowie ein Beschichter-Reinigungsverfahren.

Es sind verschiedene generative Fertigungsverfahren (und folglich verschiedene Arten von 3D-Druckern) bekannt.

Einige generative Fertigungsverfahren haben die folgenden Schritte gemeinsam:
(1) Es wird zunächst Partikelmaterial vollflächig auf ein Baufeld aufgebracht, um eine Schicht aus nicht-verfestigtem Partikelmaterial zu bilden.
(2) Die aufgebrachte Schicht aus nicht-verfestigtem Partikelmaterial wird in einem vorbestimmten Teilbereich selektiv verfestigt, zum Beispiel durch selektives Aufdrucken von Behandlungsmittel, zum Beispiel Bindemittel, (alternativ zum Beispiel durch Lasersintern).
(3) Die Schritte (1) und (2) werden wiederholt, um ein gewünschtes Bauteil zu fertigen. Hierzu kann zum Beispiel eine Bauplattform, auf der das Bauteil schichtweise aufgebaut wird, jeweils um eine Schichtdicke abgesenkt werden, bevor eine neue Schicht vollflächig aufgetragen wird (alternativ können zum Beispiel der Beschichter und die Druckvorrichtung jeweils um eine Schichtdicke angehoben werden).
(4) Schließlich kann das gefertigte Bauteil, das von losem, nicht-verfestigtem Partikelmaterial gestützt und umgeben ist, entpackt werden.

Der Bauraum, in dem das oder die Bauteile gefertigt werden, kann zum Beispiel von einer sogenannten Baubox (auch "Jobbox" genannt) definiert sein. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein oberer Bereich des Bauraums kann zum Beispiel als Baufeld bezeichnet werden. Ein Beispiel für eine solche Baubox ist zum Beispiel in DE 10 2009 056 696 A1 beschrieben.

In dem obigen Schritt (1) kommt in der Regel eine Beschichteranordnung mit einem Beschichter (auch "Recoater" genannt) zum Einsatz. Es sind unterschiedliche Beschichteranordnungen zur Verwendung in einem 3-Drucker bekannt, mit denen ein partikelförmiges Baumaterial in einer gleichmäßigen, vollflächigen Schicht auf das Baufeld (auch Baufläche oder Baubereich genannt) aufgebracht werden kann.

Eine Art von Beschichteranordnung verwendet eine Walze (kurz "Walzen-Beschichter"), vor der zunächst eine Menge an partikelförmigem Baumaterial abgelegt wird und die anschließend horizontal über das Baufeld hinweg verfahren wird, um das partikelförmige Baumaterial in Form einer gleichmäßigen Schicht auf das Baufeld aufzubringen. Die Walze kann dabei in Gegenlaufrichtung rotiert werden. Beschichteranordnungen mit großen Längen sind mit einem Walzen-Beschichter schlecht/schwierig darzustellen.

Eine andere Art von Beschichteranordnung (sogenannte Beschichteranordnung mit "Behälter-Beschichter", zum Beispiel "Schlitz-Beschichter") verwendet einen Beschichter mit einem Behälter, der über ein Baufeld hinweg verfahrbar ist und einen inneren Hohlraum zur Aufnahme von partikelförmigem Baumaterial definiert, der in einer Öffnung zum Ausgeben des partikelförmigen Baumaterials auf das Baufeld mündet. Der Beschichter kann langgestreckt sein, um zum Beispiel die Länge oder Breite eines rechteckigen Baufelds zu überspannen bzw. abzudecken. Die Öffnung kann dann als Längsschlitz ausgebildet sein. Der Beschichter kann also horizontal über das Baufeld hinweg verfahren werden und dabei partikelförmiges Baumaterial aus der Öffnung heraus auf das Baufeld ausgeben, um dadurch eine gleichmäßige, vollflächige Schicht auf das Baufeld aufzubringen.

In dem obigen Schritt (2) kann zum Beispiel eine Druckvorrichtung mit einem Druckkopf zum Einsatz kommen, der auf einen Teilbereich der zuvor aufgebrachten Baumaterial-Schicht gesteuert ein Behandlungsmittel aufbringt. Das Behandlungsmittel trägt zu einer (unmittelbaren und/oder späteren) Verfestigung der Baumaterial-Schicht in dem Teilbereich bei. Zum Beispiel kann das Behandlungsmittel ein Bindemittel sein, zum Beispiel eine Bindemittel-Komponente eines Mehrkomponenten-Bindemittels.

Alternativ kann in dem obigen Schritt (2) zum Beispiel ein Laser eingesetzt werden, um einen Teilbereich der zuvor aufgebrachten Baumaterial-Schicht zu verfestigen, insbesondere durch Sintern oder Schmelzen des Baumaterials in dem Teilbereich.

Die vorliegende Erfindung betrifft eine Beschichteranordnung der zweitgenannten Art, kurz eine Beschichteranordnung mit einem "Behälter-Beschichter", zum Beispiel "Schlitz-Beschichter".

Solche Beschichteranordnungen können zum Beispiel mit einer Vibrationsvorrichtung versehen sein, mit welcher das Partikelmaterial in Vibration versetzbar ist, um das Fließ- bzw. Rieselverhalten des partikelförmigen Baumaterials bzw. den Austrag des partikelförmigen Baumaterials aus der Öffnung zu beeinflussen, insbesondere zu fördern. Eine solche Vibrationsvorrichtung kann zum Beispiel von einer Rüttelvorrichtung gebildet sein, mit der zumindest ein Wandabschnitt des Behälters in Vibration versetzt bzw. mit einer Rüttelbewegung beaufschlagt werden kann, um den Austrag des partikelförmigen Baumaterials zu beeinflussen.

Ferner können solche Beschichteranordnungen zum Beispiel mit einer Labyrinth-Struktur im Innern des Behälters versehen sein, welche ein Ausfließen/Austreten des Baumaterials im Stillstand des Beschichters verhindern kann.

Ferner können solche Beschichteranordnungen zum Beispiel mit einem Streichelement versehen sein, mit welchem auf das Baufeld aufgebrachtes Baumaterial überstrichen werden kann, um das Baumaterial zu verdichten und/oder zu nivellieren.

Ein Beispiel für eine Beschichteranordnung mit einem "Schlitz-Beschichter" ist aus der DE 10 2009 056 689 A1 bekannt. Siehe dort zum Beispiel die Figuren 17-20.

Es ist zudem bekannt, die Behälterunterseite mit einer Beschichter-Reinigungsvorrichtung zu säubern. Eine geeignete Beschichter-Reinigungsvorrichtung ist zum Beispiel aus der DE 10 2009 056 687 A1 bekannt. Siehe dort zum Beispiel die Figur 21.

EP 1234625 A1 offenbart eine Vorrichtung zum selektiven Auftragen von Werkstoffpulver, gemäß dem Oberbegriff des Anspruchs 1.

FR 2285558 A1 offenbart ein Ausgabeventil mit aufblasbaren Membranen für eine Anordnung zur Überführung von partikelförmigem Material von einem abgeschlossenen Raum bzw. Behälter zu einem anderen, wobei die Isolierung zwischen den Behältern beibehalten wird.

Es kann als eine Aufgabe der vorliegenden Erfindung angesehen werden, eine Beschichteranordnung für einen 3D-Drucker von dem Typ "Behälter-Beschichter" bereitzustellen, die ein effizientes Aufbringen von Partikelmaterial erlaubt und/oder eine Steigerung des Anlagendurchsatzes ermöglicht und/oder eine verbesserte Handhabbarkeit hat. Ferner sollen entsprechende Verfahren bereitgestellt werden. Die vorliegende Erfindung stellt eine Beschichteranordnung für einen 3D-Drucker nach Anspruch 1, einen 3D-Drucker mit solch einer Beschichteranordnung nach Anspruch 12, verschiedene generative Herstellungsverfahren nach den Ansprüchen 13 und 14 sowie ein Beschichter-Reinigungsverfahren nach Anspruch 15 bereit. Weitere Ausgestaltungen der Beschichteranordnung sind in den abhängigen Ansprüchen 2-11 beschrieben.

Gemäß verschiedenen Ausführungsformen der Erfindung kann anschaulich eine Beschichteranordnung bereitgestellt werden, mit der partikelförmiges Baumaterial effizient aufbringbar ist. Zum Beispiel kann gemäß verschiedenen Ausführungsformen der Erfindung der Verlust an Baumaterial anschaulich gering gehalten werden. Zum Beispiel kann ein möglicher Verlust bei einer beschichtungsfreien Fahrt oder einem beschichtungsfreien Fahrabschnitt (=Fahrt oder Fahrabschnitt, bei der/dem keine Schicht aus partikelförmigen Material gebildet werden soll (zum Beispiel noch nicht oder nicht mehr), zum Beispiel Rückfahrt eines unidirektionalen Beschichters oder Vorlauf- und/oder Nachlaufabschnitt eines Beschichters vor bzw. nach dem Baufeld) vermieden oder reduziert werden. Zum Beispiel kann eine Degradierung des in dem Behälter befindlichen Baumaterials vermieden oder reduziert werden, zum Beispiel nach Beendigung oder bei Unterbrechung eines Baujobs. Dabei kann durch ein Schließen der Beschichter-Öffnung zum Beispiel eine in dem Baumaterial enthaltene Bindemittelkomponente und/oder ein in dem Baumaterial enthaltener Zuschlagstoff vor einer in dem Anlagenprozessraum vorliegenden Atmosphäre geschützt werden, die zum Beispiel eine andere Bindemittelkomponente (in Dampfform bzw. Gasform) enthalten kann. Flüssigbestandteile des Baumaterialgemischs können zudem vor einem Austrocknen geschützt werden. Zum Beispiel kann ein Verlust des in dem Behälter befindlichen Baumaterials bei einer Reinigung des Behälters vermieden oder reduziert werden.

Gemäß verschiedenen Ausführungsformen der Erfindung kann anschaulich eine Beschichteranordnung für partikelförmiges Baumaterial bereitgestellt werden, mit der der Durchsatz gesteigert werden kann. Zum Beispiel ist es gemäß verschiedenen Ausführungsformen der Erfindung möglich, die Größe der Ausgabe-Öffnung und somit letztendlich auch die Beschichter-Geschwindigkeit zu erhöhen, mit der der Beschichter über das Baufeld hinweg verfahren werden kann. Hingegen ist im Stand der Technik die Ausgabe-Öffnung (und somit letztendlich auch die Beschichter-Geschwindigkeit) auf eine solche Größe begrenzt, die ein Ausfließen/Ausrieseln im Stillstand des Beschichters unterbindet/nicht zulässt. Zwar kann die Größe der Ausgabe-Öffnung durch den Einsatz einer Labyrinth-Struktur im Innern des Behälters etwas gesteigert werden, aber auch in diesem Fall wird die Beschichter-Geschwindigkeit durch die Größe der Ausgabe-Öffnung bestimmt und limitiert. Ferner ist es gemäß verschiedenen Ausführungsformen der Erfindung zum Beispiel möglich, für eine Erhöhung des Durchsatzes zwei Beschichter, welche ein jeweils zugehöriges Baufeld bedienen, auf konstruktiv einfache und kompakte Art und Weise zusammenzuschalten.

Gemäß verschiedenen Ausführungsformen der Erfindung kann anschaulich die Handhabbarkeit einer Beschichteranordnung verbessert werden. Zum Beispiel kann gemäß verschiedenen Ausführungsformen der Erfindung anschaulich ein Reinigen des Beschichters in einer Beschichter-Reinigungsstation erleichtert werden. Indem die Öffnung des Beschichters während seiner Reinigung zumindest zeitweise geschlossen und dadurch ein ungewollter Austritt an Partikelmaterial sicher vermieden wird, kann die Beschichteranordnung, zum Beispiel ein oder mehrere Streichelemente derselben, einfach und zuverlässig gereinigt werden, zum Beispiel durch ein Abwischen (zum Beispiel Abbürsten) des oder der Streichelemente, zum Beispiel unter Verwendung der in DE 10 2009 056 687 A1 beschriebenen Beschichter-Reinigungsvorrichtung.

Unter partikelförmigem Baumaterial kann im Sinne dieser Anmeldung dabei ein Baumaterial verstanden werden, welches zumindest eine Art von Partikelmaterial (zum Beispiel Sand(körner), zum Beispiel Gießereisand, und/oder Metallpartikel und/oder Kunststoffpartikel) aufweist. Es können auch mehrere unterschiedliche Arten von Partikelmaterial in dem Baumaterial enthalten sein, zum Beispiel ein Gemisch aus neuem Sand und recyceltem Sand oder ein Gemisch aus feinem Sand und grobem Sand oder ein Gemisch aus zwei unterschiedlichen Sandtypen. Das Baumaterial kann ferner zumindest eine flüssige Komponente aufweisen, zum Beispiel eine Bindemittel-Komponente, zum Beispiel einen Aktivator, und/oder einen oder mehrere feste und/oder flüssige Zuschlagstoffe. In dem Fall, dass das Baumaterial eine Bindemittel-Komponente enthält, kann zum Beispiel eine weitere Bindemittel-Komponente, zum Beispiel Furanharz, mittels einer Druckvorrichtung selektiv auf eine zuvor aufgebrachte Baumaterial-Schicht aufgedruckt werden, um diese in einem vorbestimmten Bereich zu verfestigen. Je nach herzustellendem Bauteil, zum Beispiel eine Gussform oder ein Gießkern, kann eine speziell dafür zubereitete Baumaterial-Zusammensetzung eingesetzt werden. Die Baumaterial-Zusammensetzung kann dabei definiert werden durch die Anzahl an eingesetzten Komponenten sowie die jeweilige Art und den jeweiligen Anteil der in dem Baumaterial(gemisch) enthaltenen Komponenten. Das Riesel- bzw. Fließverhalten des Baumaterials kann dabei je nach Baumaterial-Zusammensetzung stark variieren.

Gemäß verschiedenen Ausführungsformen weist eine Beschichteranordnung für einen 3D-Drucker auf:
einen Beschichter mit einem Behälter, der einen inneren Hohlraum zur Aufnahme von partikelförmigem Baumaterial definiert, der in einer Öffnung zum Ausgeben des partikelförmigen Baumaterials (zum Beispiel auf ein Baufeld eines 3D-Druckers) mündet, sowie
eine Schließvorrichtung, die eingerichtet ist, um die Öffnung zum Ausgeben des partikelförmigen Baumaterials selektiv zu verschließen.

Der Beschichter kann zum Beispiel über ein Baufeld eines 3D-Druckers hinweg verfahrbar sein, zum Beispiel in horizontaler Richtung. Zum Beispiel kann der Beschichter hierzu entlang einer Linearführungsstruktur verfahrbar sein, zum Beispiel mittels eines Schlittens, an dem der Beschichter befestigt ist.

Die Beschichteranordnung kann ferner zum Beispiel eine Vibrationsvorrichtung aufweisen, mit welcher das Partikelmaterial in dem Behälter in Vibration versetzbar ist, um das Fließ- oder Rieselverhalten des partikelförmigen Baumaterials zu beeinflussen, um eine zweckmäßige Ausgabe von Partikelmaterial aus der Öffnung während einer Beschichtungsfahrt sicherzustellen. Eine solche Vibrationsvorrichtung kann zum Beispiel von einer Rüttelvorrichtung gebildet sein, mit der zumindest ein Wandabschnitt des Behälters in Vibration versetzt bzw. mit einer Rüttelbewegung beaufschlagt werden kann, um das Fließverhalten des partikelförmigen Baumaterials zu beeinflussen.

Der Behälter kann also zum Beispiel als sogenannter Rüttelbehälter ausgebildet sein, von dem zumindest eine Seitenwand mit einer Rüttelbewegung beaufschlagbar ist, um in dem Behälter aufgenommenes Baumaterial zu fluidisieren (d.h., in seinem Fließverhalten zu beeinflussen bzw. seinen Austrag zu beeinflussen).

Zum Beispiel kann über dem Behälter ein weiterer Behälter (sogenannter "Vorlagebehälter") angeordnet sein. In dem weiteren Behälter kann zum Beispiel eine Verteilervorrichtung, zum Beispiel in Form einer Verteilerschnecke, aufgenommen sein.

Der Behälter (zum Beispiel auch der weitere Behälter) kann zum Beispiel an einer Trägerstruktur des Beschichters befestigt sein. Die Trägerstruktur kann sich zum Beispiel in einer horizontalen Richtung erstrecken, die senkrecht zu der Richtung ist, in der der Beschichter verfahrbar ist. Die Trägerstruktur kann zum Beispiel einen oder mehrere Träger aufweisen, die sich mit ihrer Längsachse in der horizontalen Richtung erstrecken, die senkrecht zu der Richtung ist, in der der Beschichter verfahrbar ist. Zum Beispiel kann der Behälter auf einer ersten Seite mittels einer Dämpfungsvorrichtung und auf einer zweiten Seite mittels einer Rüttelvorrichtung mit der Trägerstruktur verbunden sein.

Der Behälter ist länglich ausgebildet. Die Längsachse des Behälters kann sich zum Beispiel in der horizontalen Richtung erstrecken, die senkrecht zu der Richtung ist, in der der Beschichter verfahrbar ist. Die Öffnung ist als Längsschlitz ausgebildet. Die Längsachse des Längsschlitzes kann sich in der horizontalen Richtung erstrecken, die senkrecht zu der Richtung ist, in der der Beschichter verfahrbar ist.

Der Behälter kann sich im Querschnitt zum Beispiel nach unten hin verjüngen, und kann im Querschnitt zum Beispiel trichterförmig ausgebildet sein.

Nach oben hin kann der Behälter zum Beispiel offen sein.

Die Öffnung bzw. der Längsschlitz kann sich zum Beispiel an einem unteren Endabschnitt des Behälters befinden, d.h. an dem dem Baufeld zugewandten Endabschnitt des Beschichters, und kann zum Beispiel nach unten zu dem Baufeld hin ausgerichtet sein.

Das Baufeld kann zum Beispiel von einer Bauplattform und/oder Baubox (auch "Jobbox" genannt) definiert werden, über bzw. in der ein Bauteil mittels eines 3D-Druckers in einem generativen Herstellungsverfahren aufgebaut wird/werden kann. Die Baubox kann zum Beispiel eine höhenverstellbare Bauplattform aufnehmen, die während des generativen Herstellungsverfahrens (bzw. während eines sogenannten "Baujobs") schrittweise abgesenkt wird. Der Antrieb für die Höhenverstellung kann zum Beispiel entweder direkt in die Baubox ("mitfahrend") oder zum Beispiel stationär ("anlagenfest") in dem 3D-Drucker vorgesehen sein. Die Baubox kann zum Beispiel aus dem 3D-Drucker heraus und in diesen hinein verfahrbar sein, zum Beispiel über eine Rollenbahn und/oder über einen eigenen, in die Baubox integrierten Fahrantrieb. Die Baubox kann zum Beispiel wie eingangs beschrieben ausgebildet sein, zum Beispiel wie in DE 10 2009 056 696 A1 beschrieben.

Die Schließvorrichtung kann zum Beispiel eingerichtet sein, um die Öffnung zum Ausgeben des partikelförmigen Baumaterials gesteuert (zum Beispiel mittels eines "Controllers" bzw. einer elektronischen Steuereinheit) selektiv zu verschließen, zum Beispiel (zumindest zeitweise) während eines Baujobs (d.h. während der Herstellung eines Bauteils) und/oder am Ende eines Baujobs.

Die Schließvorrichtung weist mindestens ein Schließelement auf (zum Beispiel ein oder zwei Schließelemente), das an dem Beschichter angebracht ist und eingerichtet ist, um die Öffnung selektiv zumindest teilweise zu verdecken (zum Beispiel zu "unterlappen"), insbesondere um dadurch die Öffnung selektiv zu verschließen (zum Beispiel allein oder gemeinsam mit einem weiteren Schließelement).

D.h., die Öffnung ist in der Draufsicht zunächst offen/von der Schließvorrichtung freigegeben, und ist in der Schließstellung der Schließvorrichtung von einem jeweiligen Schließelement zumindest teilweise verdeckt. Ein einziges Schließelements kann die Öffnung in der Schließstellung zum Beispiel vollständig verdecken, und mehrere Schließelemente können die Öffnung in der Schließstellung zum Beispiel jeweils teilweise verdecken, um die Öffnung hierdurch gemeinsam zu verschließen. Mehrere (zum Beispiel zwei) Schließelemente können zum Beispiel auf in Beschichter-Querrichtung gegenüberliegenden Seiten der Öffnung angeordnet sein, d.h. im Querschnitt rechts und links von der Öffnung.

Im Folgenden wird zur Vereinfachung teilweise von "dem Schließelement" gesprochen, wobei es verständlich sein sollte, dass auch mehrere Schließelemente vorgesehen sein können und die beschriebenen Merkmale dann für das jeweilige Schließelement gelten können. Die Merkmale sind also auf ein jeweiliges Schließelement anwendbar, auch wenn dies nicht immer explizit erwähnt ist.

Das Schließelement kann zum Beispiel an der/einer Trägerstruktur des Beschichters angebracht sein, zum Beispiel separat zu dem Behälters und/oder rüttelbewegungsentkoppelt zu dem Behälter und/oder im Wesentlichen starr an der Trägerstruktur.

Das an dem Beschichter angebrachte Schließelement kann also mit dem Beschichter zusammen verfahrbar an diesem befestigt sein.

Das Schließelement hat eine längliche Gestalt. Die Längsachse des Schließelements kann sich zum Beispiel im Wesentlichen parallel zu der Längserstreckung des Schlitzes erstrecken. Die Länge des Schließelements kann zum Beispiel größer gleich der Länge der Öffnung bzw. des Schlitzes sein.

Das Schließelement verdeckt die Öffnung in Folge einer seitlichen Bewegung und/oder Verschiebung (zum Beispiel seitliche Expansion) selektiv zumindest teilweise. Die seitliche Bewegung und/oder Verschiebung kann zum Beispiel zu der Öffnung hin erfolgen.

Das Schließelement kann zum Beispiel im Wesentlichen in horizontaler Richtung, insb. senkrecht zu seiner Längsachse und/oder senkrecht zu einer imaginären vertikalen Linie/Ebene, die sich durch die Öffnung bzw. den Schlitz hindurch erstreckt, bewegbar und/oder verformbar und/oder expandierbar sein, insb. auf die vertikale Linie/Ebene zu.

Gemäß verschiedenen Ausführungsformen kann das Schließelement zum Beispiel unterhalb der Öffnung angeordnet sein, zum Beispiel in vertikaler Richtung unterhalb der Öffnung, zum Beispiel mit (geringem) vertikalem Abstand zu der Öffnung. Mit anderen Worten kann das Schließelement außerhalb bzw. unterhalb des Behälters angeordnet sein. Dadurch ist es möglich, das Schließelement bzw. die Schließvorrichtung und den Behälter in gewissem Maße voneinander zu entkoppeln, zum Beispiel hinsichtlich einer möglichen durch die Vibrationsvorrichtung erzeugten, in dem Behälter auftretenden Vibration zur Fluidisierung des Partikelmaterials.

In horizontaler Richtung kann das Schließelement zum Beispiel seitlich neben der Öffnung angeordnet sein.

Gemäß verschiedenen Ausführungsformen kann der Beschichter zum Beispiel ferner mindestens ein Streichelement aufweisen (das Streichelement kann zum Beispiel von dem Beschichter mitausgebildet sein, zum Beispiel von einem nach unten vorspringenden Abschnitt und/oder unteren Endabschnitt desselben, oder kann zum Beispiel als separates Bauteil an dem Beschichter angebracht sein), das eingerichtet ist, um aus der Öffnung (zum Beispiel auf das/ein Baufeld) ausgegebenes Baumaterial zu überstreichen, um das ausgegebene Partikelmaterial zu nivellieren und/oder zu verdichten, wobei das mindestens eine Schließelement oberhalb des mindestens einen Streichelements angeordnet ist. Das Schließelement kann also zum Beispiel zwischen Öffnung und Streichelement angeordnet sein. Durch Anordnen des Schließelements oberhalb des Streichelements und insbesondere zwischen Öffnung und Streichelement kann das Schließelement einfach und sicher in die Beschichteranordnung integriert werden und kann gleichzeitig ein zweckmäßiges Ausgeben (ein optionales Fluidisieren/Vibrieren/Rütteln inbegriffen) und ein zweckmäßiges Nivellieren und/oder Verdichten ermöglicht werden.

Zum Beispiel kann die Beschichteranordnung zwei Streichelemente aufweisen, eines auf jeder Seite der Öffnung (in Beschichter-Querrichtung). In diesem Fall können zum Beispiel ein erstes Schließelement oberhalb des ersten Streichelements und ein zweites Schließelement oberhalb des zweiten Streichelements angeordnet sein.

Zum Beispiel kann das (jeweilige) Streichelement eine dem Baufeld zugewandte Streichfläche ausbilden (zum Beispiel im Wesentlichen plane Streichfläche), welche das auf das Baufeld ausgegebene Baumaterial überstreicht, um das ausgegebene Partikelmaterial zu nivellieren und/oder zu verdichten. Das (jeweilige) Streichelement kann zum Beispiel in Form einer sogenannten Streichleiste und/oder Streichklinge ausgebildet sein, welche zum Beispiel aus Metall, zum Beispiel Stahl, gefertigt sein kann.

Das mindestens eine Streichelement kann zum Beispiel an dem Beschichter angebracht sein, zum Beispiel an der Trägerstruktur des Beschichters, zum Beispiel separat zu dem Behälter und/oder rüttelbewegungsentkoppelt zu dem Behälter und/oder im Wesentlichen starr an der Trägerstruktur. Das an dem Beschichter angebrachte Streichelement kann also wie das Schließelement mit dem Beschichter zusammen verfahrbar an diesem befestigt sein.

Das mindestens eine Streichelement und das mindestens eine Schließelement können zum Beispiel fest miteinander verbunden sein und/oder gemeinsam an der Trägerstruktur befestigt sein, zum Beispiel gemeinsam an dieser aufgehängt sein. Zum Beispiel kann das Schließelement auf einer Oberseite (dem Baufeld abgewandte Seite) des Streichelements angebracht sein, zum Beispiel sich daran abstützen.

Gemäß verschiedenen Ausführungsformen kann das (mindestens eine) Schließelement zum Beispiel eine Dichtfläche aufweisen, die eingerichtet ist, um in einem Schließzustand der Schließvorrichtung an einer Gegenfläche abzudichten, wobei die Dichtfläche aus einem nachgiebigen Material gebildet ist. Hierdurch kann ein zuverlässiges Schließen der Öffnung bzw. des Schlitzes gewährleistet werden, insb. wenn/weil sich das nachgiebige Material der Kontur der Gegenfläche (dazwischen eingeschlossene Baumaterial-Partikel inbegriffen) anpassen kann. Das nachgiebige Material kann zum Beispiel ein Elastomer und/oder Silikon sein. Die Gegenfläche kann zum Beispiel gebildet sein von einer ortsfesten Gegenfläche oder einem weiteren Schließelement, das auf der anderen Seite der Öffnung angeordnet ist.

Das mindestens eine Schließelement ist von einem Hohlkörper (zum Beispiel länglicher Hohlkörper) gebildet, dessen innerer Hohlraum von einem verformbaren Abschnitt begrenzt ist, der von einem dem Hohlkörper zugeführten Druckfluid unter einer Expansion des inneren Hohlraums nach außen hin (ausgehend von dem inneren Hohlraum) verformbar ist (zum Beispiel im Wesentlichen senkrecht zu der Längsachse des Hohlkörpers und/oder zu der oben beschriebenen imaginären vertikalen Linie/Ebene durch die Öffnung bzw. den Schlitz), um dadurch die Öffnung zumindest teilweise zu verdecken. Der Hohlkörper kann zum Beispiel einen von dem verformbaren Abschnitt gebildeten Expansionsabschnitt aufweisen, an dem der Hohlkörper gezielt verformbar ist. Der verformbare Abschnitt oder Expansionsabschnitt kann sich zum Beispiel entlang der gesamten Längserstreckung des Schlitzes und/oder des länglichen Hohlkörpers erstrecken. Der längliche Hohlkörper oder zumindest der verformbare Abschnitt desselben kann zum Beispiel aus einem Elastomer und/oder Silikon hergestellt sein.

Das Schließelement in Form eines (zum Beispiel länglichen) Hohlkörpers hat sich in der Praxis bewährt (die unten beschriebene Ausführungsform mit zwei Hohlkörpern eingeschlossen), ist leicht in den Beschichter zu integrieren und kann zudem ein zuverlässiges Schließen des Schlitzes ermöglichen.

Gemäß verschiedenen Ausführungsformen kann die Schließvorrichtung zum Beispiel einen ersten und einen zweiten (zum Beispiel länglichen) Hohlkörper aufweisen (welche ein erstes und ein zweites Schließelement bilden), wobei jeder der beiden Hohlkörper einen inneren Hohlraum hat, der von einem verformbaren Abschnitt begrenzt ist, wobei die beiden Hohlkörper derart auf einander gegenüberliegenden Seiten der Öffnung (in Beschichter-Querrichtung) angeordnet sind, dass die verformbaren Abschnitte einander zugewandt sind, und wobei die verformbaren Abschnitte eingerichtet sind, um von einem dem zugehörigen Hohlkörper zugeführten Druckfluid unter einer Expansion des inneren Hohlraums nach außen hin verformt zu werden, so dass die beiden verformbaren Abschnitt aufeinander zu bewegbar und miteinander in Kontakt bringbar sind, um hierdurch die Öffnung zu verschließen.

Gemäß verschiedenen Ausführungsformen kann der (jeweilige) verformbare Abschnitt bei freigegebener Beschichter-Öffnung (zum Beispiel im unbelasteten Zustand oder nicht mit Druckfluid beaufschlagten Zustand) zum Beispiel einwärts gewölbt sein (zum Beispiel unter Bildung eines in den Hohlraum hinein vorspringenden Abschnitts) und zum Schließen der Öffnung von einem dem jeweiligen) Hohlkörper zugeführten Druckfluid nach außen wölbbar sein.

Gemäß verschiedenen Ausführungsformen kann die Schließvorrichtung zum Beispiel ferner eine Fluidleitungsstruktur aufweisen, über die der jeweilige) Hohlkörper mit einer Druckfluidquelle in Fluidverbindung bringbar ist oder steht.

Die Druckfluidquelle kann zum Beispiel eingerichtet sein, um dem Hohlkörper durch die Fluidleitungsstruktur selektiv Druckfluid zuzuführen.

Die Fluidleitungsstruktur kann zum Beispiel eine Schlauchleitungsstruktur (zum Beispiel aufweisend ein oder mehrere Schläuche) aufweisen, die an den (jeweiligen) Hohlkörper angeschlossen ist, um diesen mit Druckfluid zu versorgen. Die Schlauchleitungsstruktur kann zum Beispiel als Schleppschlauchfeitungsstruktur ausgebildet sein und zum Beispiel in eine Schleppkette integriert sein, welche den Beschichter zum Beispiel zusätzlich mittels eines oder mehrerer Schleppkabel mit elektrischem Strom versorgt (zum Beispiel einen oder mehrere Antriebe des Beschichters).

Die Druckfluidquelle kann zum Beispiel eine Druckluftquelle sein. Zum Beispiel kann die Druckfluidquelle einen Druckbehälter, einen optionalen Druckminderer und eine Armatur (z.B. Ventil) aufweisen. Der Druckbehälter kann zum Beispiel ein stationärer Druckbehälter sein, d.h., ein Druckbehälter, der nicht mit dem Beschichter mitfährt. Die Armatur, welche zum Beispiel an dem Druckbehälter oder zwischen Druckbehälter und Beschichter an der Fluidleitungsstruktur vorgesehen sein kann, kann zum Beispiel von einer Steuereinheit (zum Beispiel von der unten beschriebenen Steuereinheit) über einen mit der Armatur verbundenen Antrieb geschlossen und geöffnet werden, um dadurch den Hohlkörper selektiv mit Druckfluid zu versorgen, um hierdurch die Öffnung zu schließen.

Gemäß verschiedenen Ausführungsformen kann die Schließvorrichtung ferner zum Beispiel eine Steuereinheit (zum Beispiel "Controller" oder elektronische Steuereinheit) aufweisen, die eingerichtet ist, um die Öffnung mittels des mindestens einen Schließelements gesteuert selektiv zu schließen (zum Beispiel durch ein gesteuertes Verformen und/oder Bewegen des Schließelements). Zum Beispiel kann die Steuereinheit eingerichtet (z.B. programmiert) sein, um eines oder mehrere der weiter unten angegebenen Verfahren durchzuführen.

Zum Beispiel kann die Steuereinheit mit der oben erwähnten Druckfluidquelle in Verbindung stehen (zum Beispiel mit deren Armatur) und eingerichtet sein, um diese für ein Schließen der Öffnung derart anzusteuern, dass die Druckfluidquelle Druckfluid in den Hohlkörper einspeist, so dieser an seinem verformbaren Abschnitt verformt wird.

Gemäß verschiedenen Ausführungsformen kann die Beschichteranordnung eine Mehrzahl von Beschichtern aufweisen (zum Beispiel zwei oder mehr Beschichter), die mit einer jeweiligen, separaten Schließvorrichtung ausgestattet sind, so dass die Öffnung eines jeweiligen Beschichters unabhängig und selektiv verschließbar ist. Die Öffnung eines jeweiligen Beschichters kann also unabhängig von der Öffnung des anderen Beschichters geöffnet und geschlossen werden.

Die jeweilige Schließvorrichtung kann dabei zum Beispiel wie oben beschrieben ausgebildet sein.

D.h., zum Beispiel kann ein erster Beschichter ein erstes Baufeld bedienen, wohingegen ein zweiter Beschichter ein zweites Baufeld bedient.

Das erste und das zweite Baufeld können zum Beispiel benachbart zueinander angeordnet sein. Das erste und das zweite Baufeld können zum Beispiel in einem gemeinsamen 3D-Drucker angeordnet sein, zum Beispiel innerhalb eines gemeinsamen Anlagengehäuses desselben und/oder in einem gemeinsamen Anlagenprozessraum desselben, und/oder von einer gemeinsamen Druckvorrichtung bedient werden. Zum Beispiel können der erste und der zweite Beschichter von einer in den 3D-Drucker integrierten gemeinsamen Beschickungseinheit mit Baumaterial versorgbar sein.

Der erste und der zweite Beschichter können zum Beispiel in Längsrichtung hintereinander angeordnet sein, d.h. die Längsachsen/Längserstreckungen der beiden Beschichter können in Verlängerung zueinander oder parallel zueinander sein.

Zum Beispiel können die Beschichter gemeinsam über ein jeweils zugehöriges Baufeld hinweg verfahrbar sein. D.h., der erste und der zweite Beschichter können zum Beispiel fest miteinander verbunden sein, zum Beispiel über eine gemeinsame Basisplatte und/oder einen gemeinsamen Schlitten.

Gemäß verschiedenen Ausführungsformen kann die Beschichteranordnung ferner zum Beispiel eine Steuereinheit (zum Beispiel die oben beschriebene Steuereinheit) aufweisen, die eingerichtet (zum Beispiel programmiert) ist, um die Schließvorrichtung zu schließen, wenn der dem Beschichter (bzw. dem Baufeld, das der Beschichter bedient) zugeteilte Baujob beendet und/oder unterbrochen ist, und/oder um nach Beendigung eines Baujobs, der einem von den mehreren Beschichtern zugeordnet ist, den zugehörigen Beschichter mittels dessen Schließvorrichtung zu schließen.

Das heißt, zum Beispiel in dem Fall von zwei miteinander verbundenen Beschichtern, kann der mittels der zugehörigen Schließvorrichtung geschlossene Beschichter mit dem noch aktiven Beschichter mitfahren bzw. gemeinsam mit diesem über sein zugehöriges Baufeld verfahren werden (bis auch dessen Baujob erledigt ist), ohne dass in dem Beschichter verbliebenes Baumaterial aus dem Beschichter ausgegeben und/oder degradiert wird, wodurch ein Verlust und/oder eine Degradierung von Baumaterial vermieden werden kann.

Generell kann bei ein oder mehreren Beschichtern das in einem jeweiligen Beschichter verbliebene Baumaterial vor der in dem Bauraum der Anlage vorliegenden Atmosphäre geschützt werden, um zum Beispiel eine Alterung oder Reaktion des Baumaterials zu vermeiden oder reduzieren.

Alternativ oder zusätzlich kann die Steuereinheit eingerichtet sein, um während einer beschichtungsfreien Fahrt, zum Beispiel beschichtungsfreie Rückfahrt eines unidirektionalen Beschichters, die Schließvorrichtung des Beschichters zu schließen und/oder um während einem beschichtungsfreien Fahrtabschnitt, zum Beispiel Vorlauf- und/oder Nachlauffahrtabschnitt (zum Beispiel Beschleunigungs- und/oder Abbremsstrecke vor bzw nach dem Baufeld), die Schließvorrichtung des Beschichters zu schließen (zum Beispiel zumindest zeitweise) und/oder um in einer Ruheposition des Beschichters (zum Beispiel während einer selektiven Verfestigung der zuletzt aufgebrachten Schicht) die Schließvorrichtung des Beschichters zu schließen (zum Beispiel zumindest zeitweise) und/oder um die Schließvorrichtung des Beschichters für eine Reinigung des Beschichters (zum Beispiel von dessen Streichelement) zu schließen (zum Beispiel zumindest zeitweise).

Gemäß verschiedenen Ausführungsformen kann ein 3D-Drucker (oder "3D-Druckanlage") eine Beschichteranordnung aufweisen, die wie oben beschrieben ausgestaltet ist.

Zum Beispiel können mehrere 3D-Drucker eine 3D-Druckeranordnung bilden.

Zum Beispiel kann der (jeweilige) 3D-Drucker ferner aufweisen:
eine Druckvorrichtung zum selektiven, gesteuerten Ausgeben von Behandlungsmittel, die eingerichtet ist, um vorbestimmte Bereiche einer zuvor aufgebrachten Schicht aus Baumaterial mit Behandlungsmittel zu bedrucken (das mittels des Druckkopfes ausgegebene Behandlungsmittel trägt zu einer selektiven Verfestigung bei und kann zum Beispiel eine Bindemittelkomponente eines Mehrkomponentenbindemittels sein, wobei eine weitere Bindemittelkomponente in dem Baumaterial enthalten oder diesem zugegeben wird); und/oder
eine in den 3D-Drucker integrierte Beschickungseinheit, mit der Baumaterial frisch zubereitbar und in den (jeweiligen) Beschichter zuführbar ist, und/oder
ein oder mehrere Bauplattformen und/oder Bauboxen, die ein jeweiliges Baufeld definieren.

Die Druckvorrichtung kann zum Beispiel horizontal verfahrbar sein, zum Beispiel in einer Richtung senkrecht zu der Richtung, in der der mindestens eine Beschichter verfahrbar ist. Die Druckvorrichtung kann zum Beispiel eingerichtet sein, um mehrere Baufelder zu bedienen. Die Druckvorrichtung kann zum Beispiel zusätzlich in der Richtung verfahrbar sein, in der auch der mindestens eine Beschichter verfahrbar ist, so dass sie das oder die Baufelder mäanderförmig abfahren kann, zum Beispiel in einer U-Form.

Alternativ kann eine jeweilige Baumaterialschicht zum Beispiel mit einem Laser selektiv verfestigt, zum Beispiel gesintert, werden (sogenanntes "selektives Lasersintern").

Gemäß verschiedenen Ausführungsformen kann ein generatives Herstellungsverfahren bereitgestellt sein, bei dem in einem ersten Baubereich ein erster Baujob und zeitgleich in einem zweiten Baubereich ein zweiter Baujob durchgeführt wird, wobei der erste Baubereich von einem ersten Beschichter und der zweite Baubereich von einem zweiten Beschichter bedient wird, wobei der erste und der zweite Beschichter zum Beispiel gemeinsam über den ersten bzw. den zweiten Baubereich hinweg bewegt werden, und wobei wenn der erste Baujob beendet ist, eine Ausgabeöffnung zum Ausgeben von Baumaterial des ersten Beschichters mittels einer Schließvorrichtung geschlossen wird.

Der erste Baubereich und der zweite Baubereich können zum Beispiel horizontal benachbart zueinander angeordnet sein.

Der erste und der zweite Beschichter können zum Beispiel wie oben beschrieben ausgebildet sein. Gleiches gilt für die Schließvorrichtung.

Der erste Baujob ist weniger zeitintensiv als der zweite, wobei der zweite Baujob nach Erledigung des ersten Baujobs noch fertiggestellt wird, wobei während dieser Zeit der erste Beschichter weiter über seinen zugehörigen Baubereich zusammen mit dem zweiten Beschichter verfahren wird, jedoch ohne Baumaterial auszugeben.

Gemäß verschiedenen Ausführungsformen kann ein generatives Herstellungsverfahren bereitgestellt sein, bei dem ein Beschichter (wiederholt) über einen zugehörigen Baubereich hinweg bewegt wird, um partikelförmiges Baumaterial in Form einer (jeweiligen) gleichmäßigen Schicht auf den Baubereich auszugeben, wobei eine Ausgabe-Öffnung des Beschichters
während einer beschichtungsfreien Fahrt, zum Beispiel beschichtungsfreie Rückfahrt eines unidirektionalen Beschichters, und/oder
während einem beschichtungsfreien Fahrtabschnitt, zum Beispiel Vorlauf- und/oder Nachlauffahrtabschnitt, und/oder
in einer Ruheposition des Beschichters und/oder bei/nach Beendigung und/oder Unterbrechung eines Baujobs und/oder für eine Reinigung des Beschichters (zum Beispiel Vor-, Nach- und/oder Zwischenreinigung bzgl. eines Baujobs)
zumindest zeitweise mittels einer an dem Beschichter angebrachten Schließvorrichtung geschlossen wird.

Gemäß verschiedenen Ausführungsformen kann ein Beschichter-Reinigungsverfahren bereitgestellt sein, bei dem ein Beschichter eines 3D-Druckers zu einer Reinigungsstation des 3D-Druckers verfahren wird, um den Beschichter zu reinigen (zum Beispiel dessen Unterseite abzubürsten), wobei eine Ausgabeöffnung des Beschichters während einer Reinigung des Beschichters, zum Beispiel während einer Reinigung von einem Streichelement desselben, zumindest zeitweise mittels einer an dem Beschichter angebrachten Schließvorrichtung geschlossen wird. Hierdurch kann zum Beispiel ein ungewollter Austrag von Partikelmaterial während des Reinigens vermieden werden.

In den obigen generativen Herstellungsverfahren/Fertigungsverfahren und/oder dem obigen Beschichter-Reinigungsverfahren kann eine wie oben beschrieben ausgebildete Beschichteranordnung und/oder ein wie oben beschrieben ausgebildeter 3D-Drucker verwendet werden. Ferner können die obigen generativen Herstellungsverfahren/Fertigungsverfahren zum Beispiel die eingangs genannten Schritte/Merkmale (1) bis (4) aufweisen.

Beispielgebende, aber nicht einschränkende Ausführungsformen der Erfindung sind in den Figuren dargestellt und werden im Folgenden näher erläutert.

Es zeigen:
Figur 1 eine Seitenansicht einer Beschichteranordnung gemäß einer ersten Ausführungsform der Erfindung.
Figur 2 eine Perspektivansicht auf eine Stirnseite der Beschichteranordnung aus Figur 1.
Figur 3 eine weitere Perspektivansicht auf die Stirnseite aus Figur 2.
Figur 4 eine geschnittene Perspektivansicht der Beschichteranordnung aus Figur 1.
Figur 5 eine geschnittene Perspektivansicht der Beschichteranordnung aus Figur 1.
Figur 6 eine Querschnittansicht durch die Beschichteranordnung aus Figur 1 an einer ersten Längsposition.
Figur 7 eine Querschnittansicht durch die Beschichteranordnung aus Figur 1 an einer zweiten Längsposition.
Figur 8a eine Querschnittansicht durch eine Beschichteranordnung gemäß einer zweiten Ausführungsform der Erfindung, wobei die Schließvorrichtung geöffnet ist.
Figur 8b eine Querschnittansicht durch die Beschichteranordnung aus Figur 8a, wobei die Schließvorrichtung geschlossen ist.
Figur 9 eine Querschnittansicht durch ein Schließelement zur Verwendung in einer erfindungsgemäßen Beschichteranordnung, in einem geöffneten Zustand des Schließelements.
Figur 10 einen vergrößerten Abschnitt der Seitenansicht aus Figur 1.
Figur 11 einen 3D-Drucker gemäß einer Ausführungsform der Erfindung, wobei das Anlagengehäuse und die Beschickungseinheit weggelassen sind.
Figur 12 den 3D-Drucker aus Figur 11, diesmal mit einem Großteil des Anlagengehäuses und mit integrierter Beschickungseinheit.

Die Figuren 13 und 14 in einer Draufsicht bzw. Perspektivansicht von oben eine 3D-Druckeranordnung, mit einem ersten und einem zweiten 3D-Drucker.

In der folgenden ausführlichen Beschreibung wird auf die beigefügten Figuren Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung können Begriffe wie "verbunden", "angeschlossen" sowie "gekoppelt" verwendet werden zum Beschreiben sowohl einer direkten als auch einer indirekten Verbindung, eines direkten oder indirekten Anschlusses sowie einer direkten oder indirekten Kopplung.

In den Figuren werden identische oder ähnliche Elemente mit identischen Bezugszeichen versehen, soweit dies zweckmäßig ist.

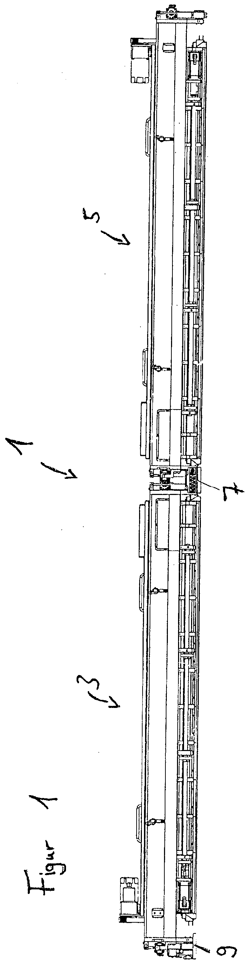

Figur 1 zeigt eine Seitenansicht einer Beschichteranordnung gemäß einer ersten Ausführungsform der Erfindung.

Die Beschichteranordnung ist hier beispielgebend mit zwei Beschichtern ausgestaltet. Es versteht sich, dass die Beschichteranordnung alternativ nur mit einem Beschichter oder mit weiteren Beschichtern ausgestattet sein kann, wobei die unten beschriebenen Merkmale analog anwendbar sind, d.h. nicht auf eine Beschichteranordnung mit zwei Beschichtern beschränkt sind.

Die hier gezeigte Beschichteranordnung 1 weist einen ersten Beschichter 3 und einen zweiten Beschichter 5 auf. Im Folgenden wird hauptsächlich der erste Beschichter 3 beschrieben, und die in diesem Zusammenhang genannten Merkmale sind analog anwendbar auf den zweiten Beschichter 5.

Der erste Beschichter 3 und der zweite Beschichter 5 können zum Beispiel über eine Basisplatte 7 fest miteinander verbunden sein, so dass sie gemeinsam über ein jeweiliges Baufeld hinweg verfahrbar sind. Im vorliegenden Fall ist jeder Beschichter an einer seiner Stirnseiten an der Basisplatte 7 befestigt, zum Beispiel abgestützt. Die Basisplatte 7 kann wiederum entlang einer (nicht gezeigten) Linearführungsstruktur verfahrbar sein, die sich in Figur 1 senkrecht zu der Zeichenebene erstrecken würde.

Ferner kann der erste Beschichter 3 mit seiner anderen Stirnseite zum Beispiel an einer weiteren Basisplatte 9 befestigt sein. Die Basisplatte 9 kann wiederum entlang einer weiteren (ebenfalls nicht gezeigten) Linearführungsstruktur verfahrbar sein. Auch der zweite Beschichter 5 kann an seiner anderen Stirnseite an einer weiteren (nicht gezeigten) Basisplatte befestigt sein.

Wie in Figur 1 gezeigt, können die beiden Beschichter 3 und 5 zum Beispiel jeweils langgestreckt ausgebildet sein, wobei sich die jeweilige Längsachse senkrecht zur Bewegungsrichtung erstreckt. Ferner können die beiden Beschichter 3 und 5 in Längsrichtung hintereinander angeordnet sein.

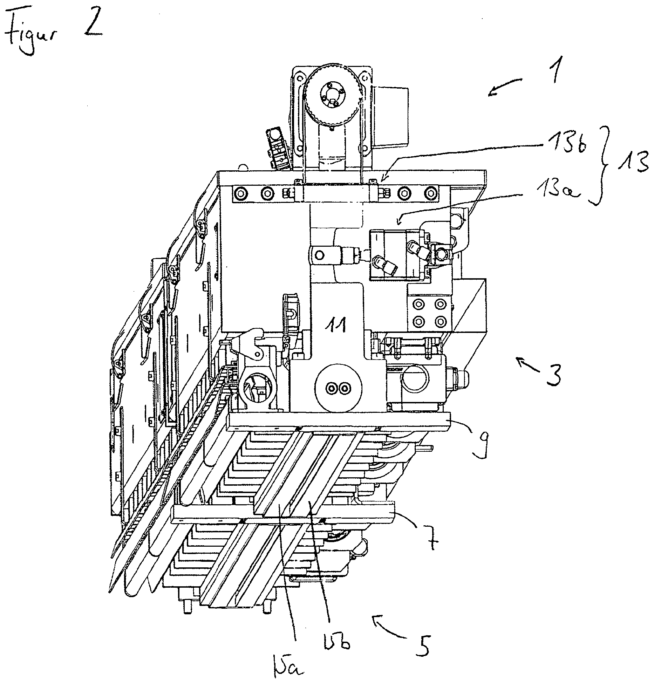

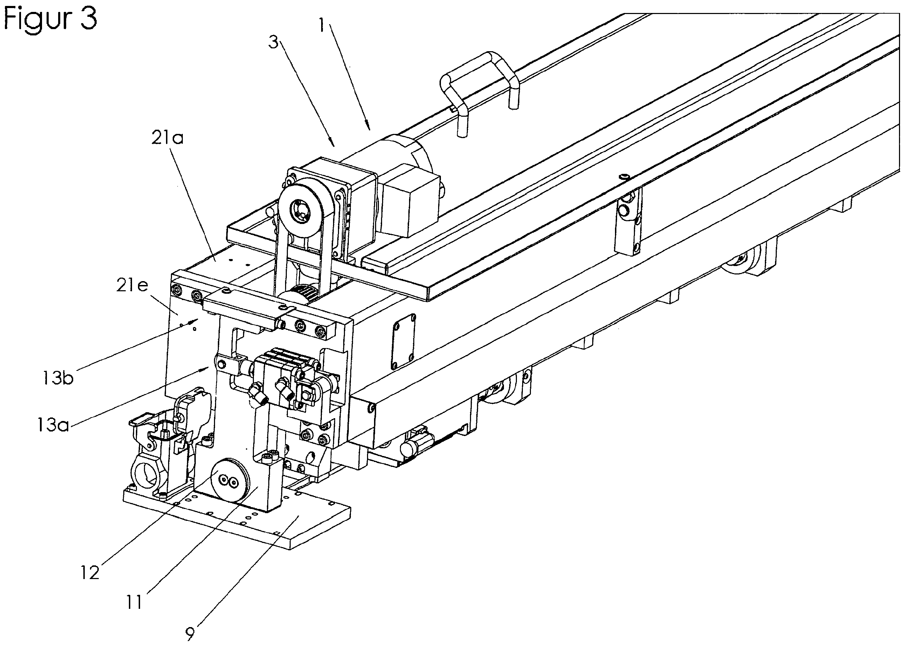

Die **Figuren 2** **und** **3** zeigen eine Perspektivansicht auf eine Stirnseite der Beschichteranordnung aus Figur 1.

Wie in den Figuren 2 und 3 gezeigt, kann der erste Beschichter 3 zum Beispiel an seiner freien, dem zweiten Beschichter 5 abgewandten Stirnseite über einen Lagerbock 11 an der Basisplatte 9 befestigt sein. Analog kann der Beschichter 3 zum Beispiel über einen weiteren Lagerbock an der Basisplatte 7 befestigt sein. Der Beschichter 3 kann zum Beispiel schwenkbar an dem jeweiligen Lagerbock 11 gelagert sein. Dies ermöglicht ein Schwenken des Beschichters 3 um eine horizontale Schwenkachse, die parallel verläuft zu der Längsachse des Beschichters 3, um mittels einer Schwenkvorrichtung 13 einen Neigungswinkel von an dem Beschichter 3 angebrachten, optionalen Streichelementen 15a und 15b einzustellen. Die Schwenkvorrichtung ist hier beispielgebend mit einem Hydraulikantrieb 13a, der zwischen Lagerbock und Beschichter angeordnet ist, und einem elektronisch verstellbaren Anschlagsystem 13b ausgeführt, das den Schwenkwinkel des Beschichters nach rechts und links variabel begrenzt.

Die beiden optionalen Streichelemente 15a und 15b sind hier beispielgebend als Streichleisten ausgebildet und können zum Beispiel aus Stahl gefertigt sein. Die Streichelemente 15a und 15b können auch als Klingen bezeichnet werden.

Wie in Figur 2 gezeigt, bilden die Streichelemente 15a und 15b zum Beispiel eine nach unten gerichtete Streichfläche aus, die im Wesentlichen eben ausgebildet ist. Durch Einstellen des Neigungswinkels der jeweiligen Streichfläche der Streichelemente 15a und 15b kann ein gewünschter Verdichtungsgrad des Partikelmaterials eingestellt werden. Der vorliegende Beschichter 3 ist dabei beispielgebend als bidirektionaler Beschichter ausgebildet, der in beiden Richtungen, während einer Hin- und während einer Rückfahrt, beschichten und das ausgegebene Partikelmaterial zweckmäßig verdichten kann.

Es versteht sich, dass die beschriebene Beschichteranordnung auch als unidirektionale Beschichteranordnung ausgestaltet sein kann, in welchem Fall eine der Klingen eingespart werden kann. Zudem kann die Beschichteranordnung auch ohne schwenkbaren Beschichter und/oder ohne verstellbaren Klingenwinkel ausgeführt werden.

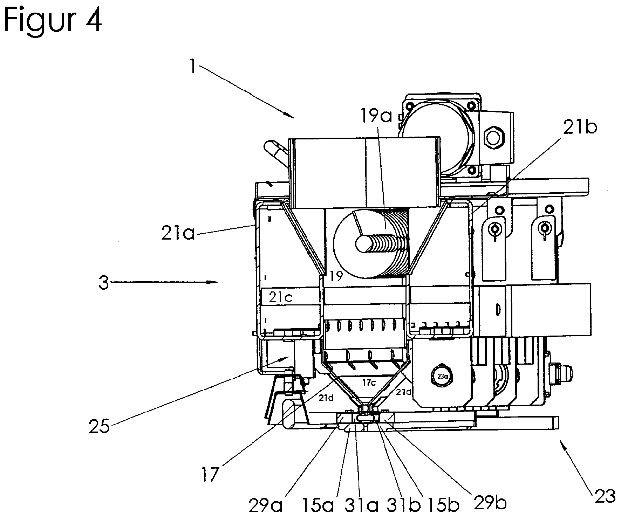

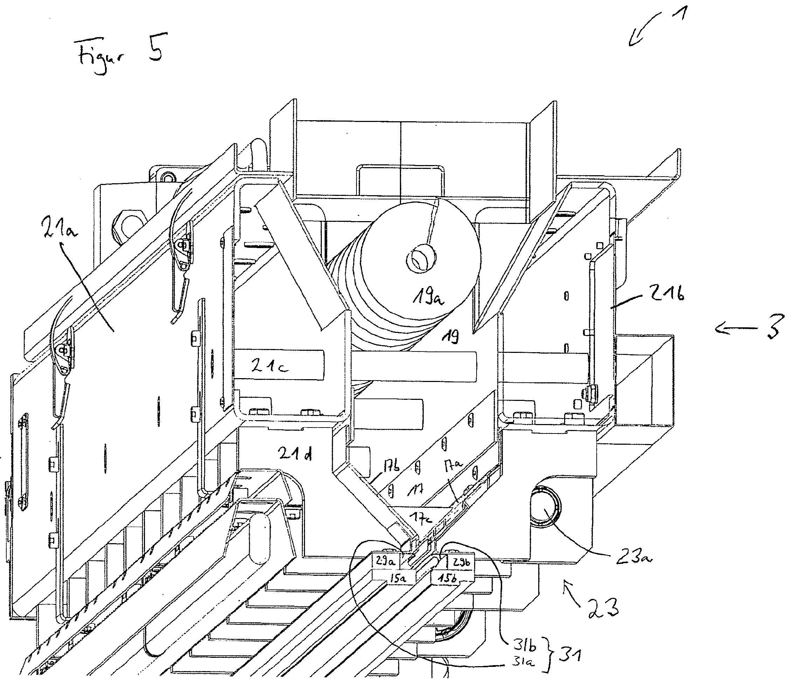

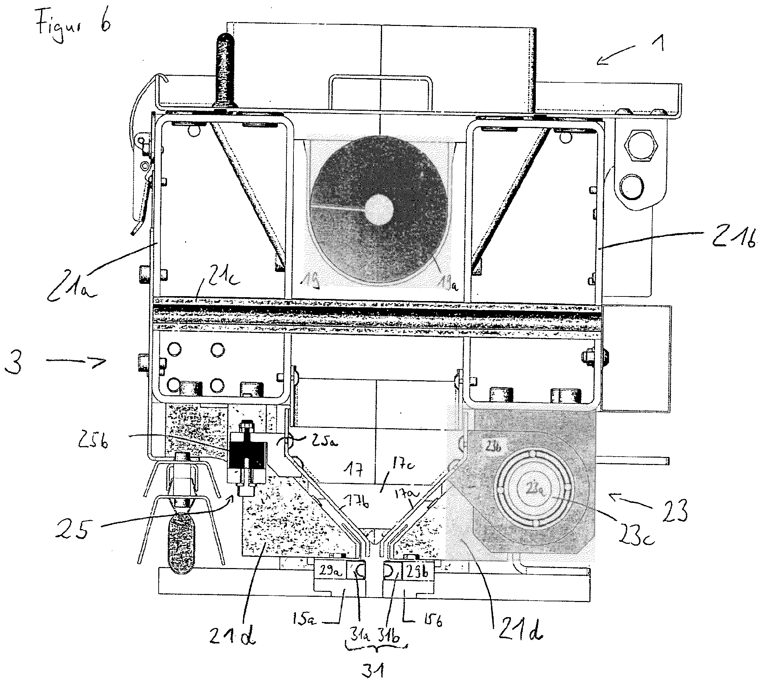

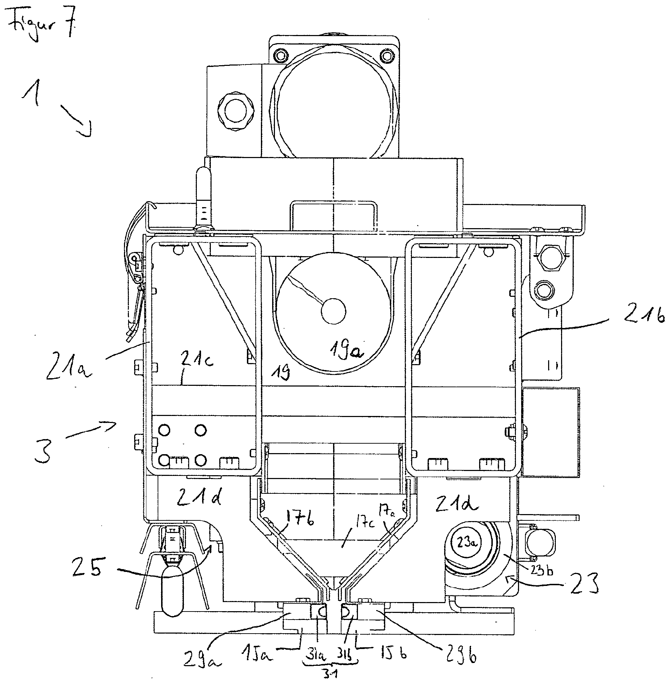

Wie aus den **Figuren 4 bis 7** ersichtlich, kann der Beschichter 3 zum Beispiel einen ersten, unteren Behälter 17, einen (optionalen) zweiten, oberen Behälter 19 und eine Trägerstruktur aufweisen.

Die Trägerstruktur kann zum Beispiel einen oder mehrere quer zur Bewegungsrichtung bzw. in Beschichter-Längsrichtung verlaufende Träger 21a, 21b aufweisen, die zum Beispiel entlang der Beschichter-Längsrichtung mit mehreren Rohren oder Stäben 21c in Querrichtung verbunden sein können. Wie aus Figur 3 ersichtlich, können die Träger 21a, 21b zum Beispiel an zumindest einer ihrer Stirnseiten mit einer Verbindungsplatte 21e verbunden sein.

Der erste und der zweite Behälter 17, 19 können zum Beispiel jeweils eine langgestreckte Form haben.

Der erste Behälter 17 hat hier beispielgebend eine sich im Querschnitt nach unten hin verjüngende Form, zum Beispiel Trichterform. An seinem unteren Ende hat der erste Behälter 17 einen Längsschlitz (ohne Bezugszeichen). An seinem oberen Ende kann der erste Behälter 17 zum Beispiel offen sein und mit einem unteren, offenen Ende des zweiten Behälters in Verbindung stehen. Zum Beispiel kann der erste Behälter 17 entlang der Längsrichtung mit ein oder mehreren Versteifungselementen 17c versteift sein.

Der erste Behälter 17 kann beispielgebend als Rüttelbehälter ausgeführt sein, dessen eine Seitenwand 17a (hier die rechte Seitenwand) von einer Rüttelvorrichtung 23 mit einer Rüttelbewegung beaufschlagbar ist, um in dem Behälter 17 aufgenommenes partikelförmiges Baumaterial in Vibration zu versetzen.

Der erste Behälter 17 ist hier beispielgebend auf einer Seite (hier an der rechten Seitenwand 17a) über die Rüttelvorrichtung 23 mit der Trägerstruktur verbunden und auf der anderen Seite (hier an der linken Seitenwand 17b) über eine Dämpfungsvorrichtung 25 mit der Trägerstruktur verbunden.

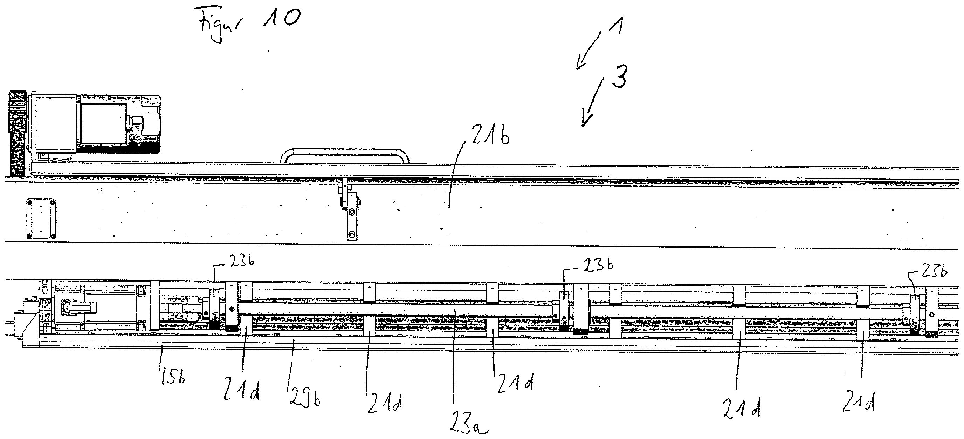

Die Rüttelvorrichtung 23 kann zum Beispiel eine Welle 23a aufweisen, die über einen Exzenter 23c mit einem Pleuel 23b verbunden ist, der mit der einen Seite des ersten Behälters 17 verbunden ist. Es können in Beschichter-Längsrichtung mehrere Pleuel 23b hintereinander vorgesehen sein. Siehe zum Beispiel **Figur 10****.**

Die Dämpfungsvorrichtung 25 kann zum Beispiel ein Dämpfungselement 25b, das an der Trägerstruktur befestigt ist, sowie einen Vorsprungabschnitt 25a aufweisen, der mit der anderen Seite des ersten Behälters 17 verbunden oder von diesem gebildet ist und sich auf dem Dämpfungselement abstützt. Es können in Beschichter-Längsrichtung mehrere Dämpfungsvorrichtungen 25 hintereinander vorgesehen sein, d.h. der erste Behälter kann entlang der Beschichter-Längsrichtung an mehreren Stellen mit der Trägerstruktur verbunden sein.

Der (optionale) zweite Behälter 19 kann beispielgebend eine im Querschnitt rechteckige Form haben. Der zweite Behälter dient hier als sogenannter Vorlagebehälter, der den ersten Behälter mit Baumaterial versorgt. In dem zweiten Behälter kann zum Beispiel ein Verteilerelement 19a, hier eine Verteilerschnecke, aufgenommen sein. Der zweite Behälter 19 kann starr mit der Trägerstruktur verbunden sein und/oder von dieser gebildet/begrenzt sein.

In dem gezeigten Ausführungsbeispiel sind der erste Behälter und der zweite Behälter voneinander rüttelbewegungsentkoppelt.

Es sei angemerkt, dass die oben beschriebene Form/Ausgestaltung und Befestigung des ersten Behälters sowie die Ausbildung des ersten Behälters als Rüttelbehälter, das Vorsehen eines zweiten Behälters und die beschriebene Trägerstruktur lediglich optionale Merkmale der beschriebenen Beschichteranordnung darstellen. Es kann zum Beispiel der zweite Behälter eingespart werden und/oder eine anders ausgebildete Trägerstruktur vorgesehen sein. Gleiches gilt für die unten beschriebene Aufhängung der optionalen Streichelemente 15a und 15b und der Schließelemente 31a und 31b.

Wie ferner aus den Figuren 4 bis 7 ersichtlich (siehe auch Figur 10), kann die Trägerstruktur zum Beispiel entlang der Beschichter-Längsrichtung auf beiden Seiten des Behälters 17 mehrere Rippen 21 d aufweisen, die im Wesentlichen starr mit den Trägern 21a bzw. 21b verbunden sind und an denen die Streichelemente 15a und 15b befestigt sind, zum Beispiel im Wesentlichen starr und von dem ersten Behälter 17 rüttelbewegungsentkoppelt, zum Beispiel unter Verwendung einer jeweiligen Leiste 29a bzw. 29b, die zum Beispiel über ein jeweiliges Zwischenteil (ohne Bezugszeichen) an der Rippe befestigt ist.

Oberhalb des ersten Streichelements 15a und unterhalb des Längsschlitzes, also zwischen erstem Streichelement 15a und erstem Behälter 17 ist ein erstes Schließelement 31a angeordnet. Dieses ist beispielgebend nach unten hin von einer Oberseite des ersten Streichelements 15a umgeben, und wird zudem auf einer lateralen Seite von der Leiste 29a und nach oben hin von dem Zwischenteil (ohne Bezugszeichen) umgeben. In einer Richtung senkrecht zu der Längsrichtung des Beschichters 3 und senkrecht zu einer imaginären, vertikalen Ebene durch den Längsschlitz liegt das erste Schließelement 31a frei.

Analog ist oberhalb des zweiten Streichelements 15b und unterhalb des Längsschlitzes, also zwischen zweitem Streichelement 15b und erstem Behälter 17 ein zweites Schließelement 31b angeordnet. Dieses ist beispielgebend nach unten hin von einer Oberseite des zweiten Streichelements 15b umgeben, und wird auf einer lateralen Seite von der Leiste 29b und nach oben hin von dem Zwischenteil (ohne Bezugszeichen) umgeben. In einer Richtung senkrecht zu der Längsrichtung des Beschichters 3 und senkrecht zu der imaginären, vertikalen Ebene durch den Längsschlitz liegt das zweite Schließelement 31 b frei.

Das jeweilige Schließelement 31a, 31b kann zum Beispiel mit dem zugehörigen Streichelement und/oder der zugehörigen Leiste und/oder dem zugehörigen Zwischenteil fest verbunden sein, zum Beispiel durch Kleben.

Die beiden Schließelemente 31a und 31b, weiche zum Beispiel langgestreckt ausgebildet sind, bilden zusammen eine Schließvorrichtung 31 aus, die eingerichtet ist, um die Öffnung des Behälters 17 zum Ausgeben des partikelförmigen Baumaterials selektiv zu verschließen. In den Figuren 4 bis 7 sind die Schließelemente 31a und 31b dabei in ihrem jeweiligen geöffneten Zustand gezeigt.

Die Schließelemente 31a und 31b gemäß der gezeigten, beispielgebenden Ausführungsform können die Öffnung in ihrem jeweiligen Schließzustand selektiv teilweise verdecken (zum Beispiel in Folge einer seitlichen Ausdehnung des jeweiligen Schließelements), so dass die Schließelemente 31a und 31b die Öffnung gemeinsam verschließen.

Wie gezeigt, können das erste Schließelement 31a und das zweite Schließelement 31b zum Beispiel einen ersten bzw. einen zweiten Hohlkörper aufweisen, wobei jeder der beiden Hohlkörper einen inneren Hohlraum hat, der von einem verformbaren Abschnitt begrenzt ist, wobei die beiden Hohlkörper derart auf einander gegenüberliegenden Seiten der Öffnung angeordnet sind, dass die verformbaren Abschnitte einander zugewandt sind, wobei jeder der beiden verformbaren Abschnitte eingerichtet ist, um von einem dem zugehörigen Hohlkörper zugeführten Druckfluid unter einer Expansion des inneren Hohlraums verformt zu werden, so dass die beiden verformbaren Abschnitt aufeinander zu bewegbar und miteinander in Kontakt bringbar sind, um hierdurch die Öffnung zu verschließen.

Die verformbaren Abschnitte können zum Beispiel von dem oben beschriebenen, seitlichen, freien Abschnitt des jeweiligen Schließelements gebildet sein.

Ein derart ausgebildetes Schließelement kann gemäß verschiedenen Ausführungsformen zum Beispiel auch als aufblasbares Dichtelement bezeichnet werden.

Es versteht sich, dass in einer beispielgebenden Abwandlung der gezeigten Ausführungsform anstelle der zwei Schließelemente 31a und 31 b zum Beispiel nur ein Schließelement 31a vorgesehen sein kann, das in dem geschlossenen Zustand der Schließvorrichtung die Öffnung vollständig verdeckt. Ferner alternativ könnte die Schließvorrichtung zum Beispiel ein oder mehrere Schieber aufweisen.

Es sei noch angemerkt, dass die in Figur 1 gezeigte Beschichteranordnung für jeden der Beschichter 3 und 5 eine separate Schließvorrichtung aufweisen kann, so dass die Öffnung eines jeweiligen Beschichters unabhängig und selektiv verschließbar ist.

Ferner kann in dem Fall, dass der Beschichter 3 zusammen mit dem Beschichter 5 vorgesehen ist, derjenige Beschichter, dessen Baujob zuerst beendet ist, mittels seiner zugehörigen Schließvorrichtung geschlossen werden, zum Beispiel mindestens solange bis der Baujob des anderen Beschichters erledigt ist.

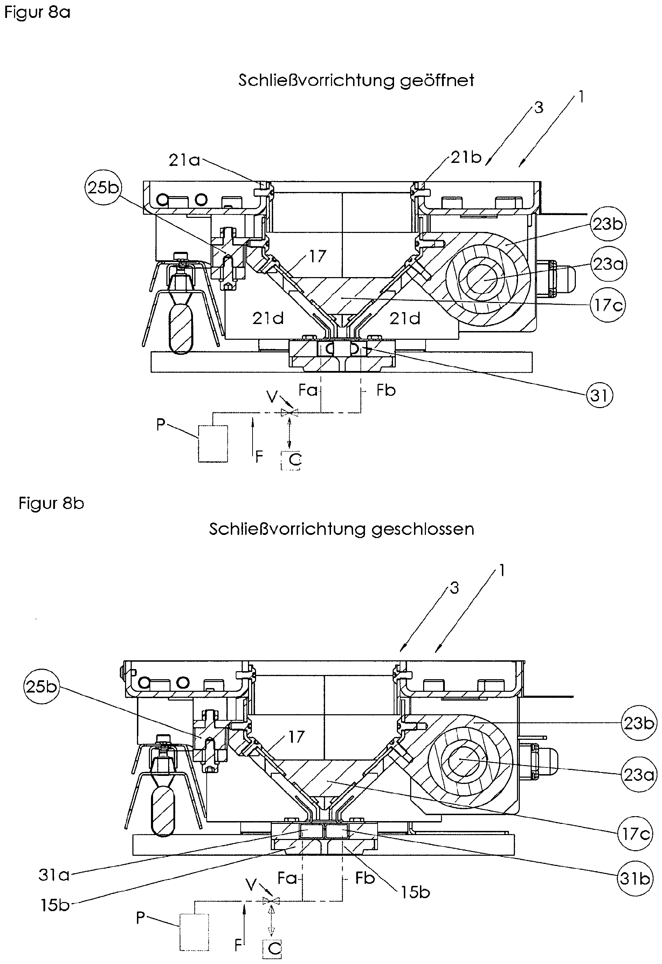

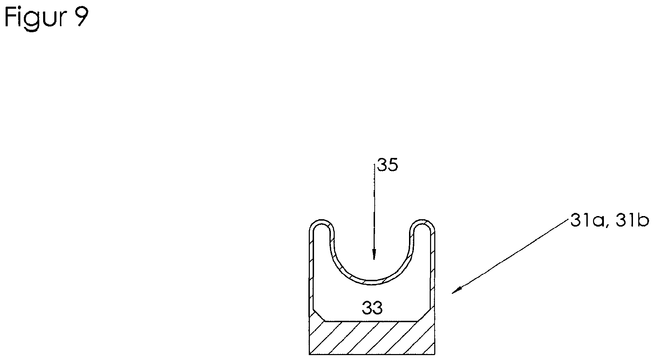

Im Folgenden wird mit Bezug auf die **Figuren 8a, 8b** **und** **9** eine Beschichteranordnung gemäß einer zweiten Ausführungsform der Erfindung beschrieben.

Wie in den Figuren 8a und 8b gezeigt, hat die Beschichteranordnung 1 einen Beschichter 3 mit einem Behälter 17, der einen inneren Hohlraum zur Aufnahme von partikelförmigem Baumaterial definiert, der in einer Öffnung zum Ausgeben des partikelförmigen Baumaterials mündet, sowie eine Schließvorrichtung 31, die eingerichtet ist, um die Öffnung zum Ausgeben des partikelförmigen Baumaterials selektiv zu verschließen.

Wie gezeigt, kann die Schließvorrichtung 31 mindestens ein (hier beispielgebend zwei) an dem Beschichter 3 angebrachtes Schließelement 31a, 31b aufweisen, das eingerichtet ist, um die Öffnung selektiv zumindest teilweise zu verdecken, zum Beispiel in Folge einer seitlichen Bewegung und/oder Verformung, wie zum Beispiel einer seitlichen Expansion.

Wie aus den Figuren 8a und 8b ersichtlich, kann das mindestens eine Schließelement 31 a, 31 b zum Beispiel unterhalb der Öffnung angeordnet sein, zum Beispiel mit vertikalem Abstand dazu, und/oder an dem Beschichter 3 kann zum Beispiel ferner mindestens ein (hier beispielgebend zwei) Streichelement 15a, 15b angebracht sein, das eingerichtet ist, um aus der Öffnung ausgegebenes Baumaterial zu überstreichen, um dadurch das ausgegebene Partikelmaterial zu nivellieren und/oder zu verdichten, wobei das mindestens eine Schließelement 31a, 31b oberhalb des mindestens einen Streichelements angeordnet ist.

Das mindestens eine Schließelement 31 a, 31b oder zumindest der unten beschriebene, verformbare Abschnitt davon ist hier beispielgebend aus einem nachgiebigen, elastischen Silikonmaterial gefertigt und weist eine Dichtfläche auf, die eingerichtet ist, um in einem Schließzustand der Schließvorrichtung an einer Gegenfläche abzudichten. Die Dichtfläche ist dabei an dem verformbaren Abschnitt ausgebildet, der unten beschrieben wird. Gemäß der gezeigten Ausführungsform ist die Gegenfläche ebenfalls von einem verformbaren Abschnitt gebildet.

Wie aus den Figuren 8a, 8b und 9 ersichtlich, können das erste Schließelement 31a und das zweite Schließelement 31b zum Beispiel einen ersten bzw. einen zweiten Hohlkörper aufweisen, wobei jeder der beiden Hohlkörper einen inneren Hohlraum 33 hat (siehe Figur 9), der von einem verformbaren Abschnitt 35 begrenzt ist, wobei die beiden Hohlkörper derart auf einander gegenüberliegenden Seiten der Öffnung angeordnet sind (siehe Figur 8a), dass die verformbaren Abschnitte einander zugewandt sind, und wobei jeder der beiden Hohlkörper eingerichtet ist, um von einem zugeführten Druckfluid unter einer Expansion des inneren Hohlraums an dem verformbaren Abschnitt nach außen hin verformt zu werden, so dass die beiden verformbaren Abschnitte aufeinander zu bewegbar und miteinander in Kontakt bringbar sind, um hierdurch die Öffnung zu verschließen (siehe Figur 8b). Wie aus Figur 8b ersichtlich, verdeckt dabei jedes der beiden Schließelemente 31 a, 31b teilweise die Öffnung.

Wie aus den Figuren 8a, 8b und 9 ersichtlich, kann der verformbare Abschnitt 35 zum Beispiel bei freigegebener Öffnung einwärts gewölbt sein und zum Schließen der Öffnung von einem dem Hohlkörper zugeführten Druckfluid nach außen wölbbar sein.

Wie in den Figuren 8a und 8b angedeutet, kann die Schließvorrichtung 31 zum Beispiel ferner eine Fluidleitungsstruktur F aufweisen (gestrichelte Line), über die das jeweilige Schließelement 31a, 31b mit einer Druckfluidquelle in Fluidverbindung steht.

Die Fluidleitungsstruktur F kann zum Beispiel zumindest abschnittsweise als Schlauchleitungsstruktur ausgebildet sein, zum Beispiel als Schleppschlauchleitungsstruktur. Die Schlauchleitungsstruktur kann eine erste und eine zweite Schlauchleitung Fa bzw. Fb aufweisen, wobei die jeweilige Schlauchleitung zum Beispiel an einer Stirnseite des zugehörigen Schließelements 31a, 31b an dasselbe angeschlossen sein kann.

Die Druckfluidquelle weist hier beispielgebend einen Druckluftbehälter P, der hier beispielgebend als ortsfester Behälter ausgebildet ist, sowie ein Ventil V auf, das zum Beispiel zwischen dem Druckluftbehälter P und den Schließelementen an der Fluidleitung F montiert sein kann.

Wie in den Figuren 8a und 8b ferner angedeutet, kann die Schließvorrichtung 31 zum Beispiel ferner eine Steuereinheit C aufweisen, die eingerichtet ist, um die Öffnung mittels des mindestens einen Schließelements 31 a, 31b gesteuert selektiv zu schließen.

Dabei steht die Steuereinheit hier beispielgebend mit dem Ventil V in Verbindung und ist eingerichtet, um dieses für ein Schließen der Öffnung derart anzusteuern, dass die Druckfluidquelle Druckfluid in den mindestens einen Hohlkörper 31a einspeist, so dass dieser an seinem verformbaren Abschnitt 35 verformt wird, um hierdurch die Öffnung zu verschließen.

In Figur 8a ist das Ventil dabei geschlossen (und folglich die Schließvorrichtung geöffnet), wohingegen in Figur 8b das Ventil geöffnet ist (und folglich die Schließvorrichtung geschlossen ist).

Die Steuereinheit C kann zum Beispiel eingerichtet sein, um
die Schließvorrichtung 31 zu schließen, wenn der dem Beschichter 3 zugeteilte Baujob beendet und/oder unterbrochen ist, und/oder
während einer beschichtungsfreien Fahrt und/oder während einem beschichtungsfreien Fahrtabschnitt, zum Beispiel Vorlauf- und/oder Nachlauffahrtabschnitt, die Schließvorrichtung 31 des Beschichters 3 zumindest zeitweise zu schließen und/oder
in einer Ruheposition des Beschichters 3 die Schließvorrichtung 31 des Beschichters zu schließen und/oder
die Schließvorrichtung 31 des Beschichters 3 für eine Reinigung des Beschichters zumindest zeitweise zu schließen.

Wie in der ersten Ausführungsform, kann zum Beispiel auch in dieser Ausführungsform ein optionaler zweiter Beschichter vorgesehen sein. Dieser kann zum Beispiel eine separate Schließvorrichtung aufweisen, die von der Steuereinheit analog der ersten Schließvorrichtung angesteuert wird.

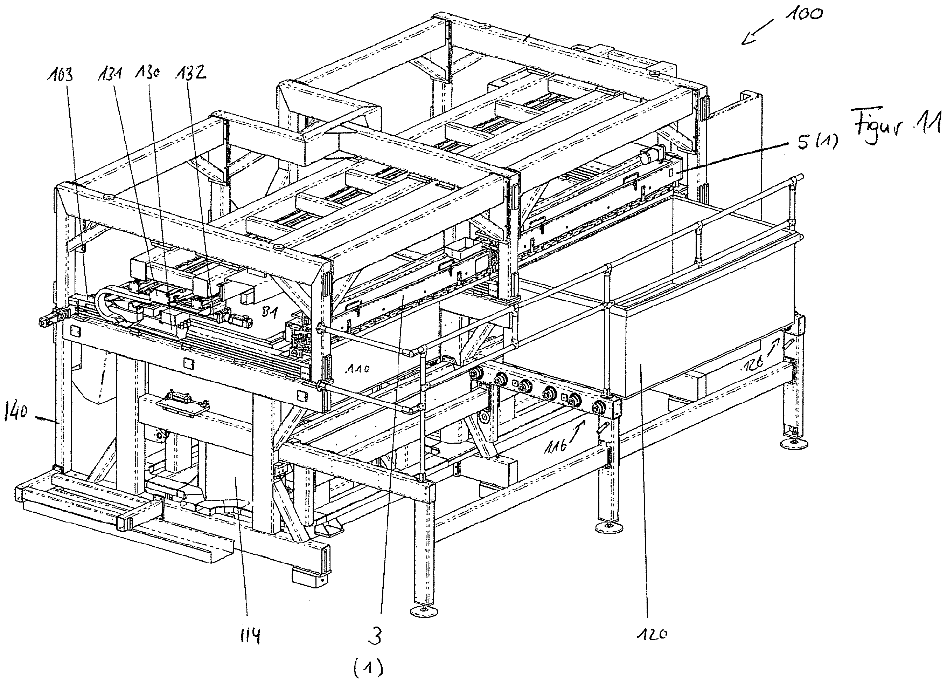

Figur 11 zeigt einen 3D-Drucker 100 gemäß einer Ausführungsform der Erfindung, wobei das Anlagengehäuse weggelassen ist, so dass der Anlagenrahmen 140 zu erkennen ist.

Wie in Figur 11 gezeigt, kann die oben beschriebene Beschichteranordnung 1 gemäß der ersten Ausführungsform und/oder der zweiten Ausführungsform in einem 3D-Drucker 100 eingesetzt werden. Das Bezugszeichen 103 zeigt in diesem Zusammenhang eine Linearführungsstruktur für den mindestens einen Beschichter 3.

Der 3D-Drucker 100 kann zum Beispiel neben der Beschichteranordnung 1 (hier beispielgebend aufweisend einen ersten und einen zweiten Beschichter 3, 5) eine Druckvorrichtung mit einem Druckkopf 130 aufweisen, der eingerichtet ist, um einen vorbestimmten Teilbereich einer zuvor aufgebrachten Schicht aus Baumaterial mit Behandlungsmittel zu bedrucken.

Der Druckkopf 130 kann zum Beispiel horizontal verfahrbar sein, zum Beispiel in einer Richtung senkrecht zu der Richtung, in der der mindestens eine Beschichter 3, 5 verfahrbar ist, zum Bespiel entlang einer ersten Druckkopf-Unearführungsführungsstruktur 131.

Der Druckkopf 130 kann dabei zum Beispiel eingerichtet sein, um mehrere Baufelder (hier zwei) zu bedienen.

Der Druckkopf 130 kann zum Beispiel zusätzlich in der Richtung verfahrbar sein, in der auch der mindestens eine Beschichter 3, 5 verfahrbar ist, so dass er das oder die Baufelder insgesamt mäanderförmig abfahren kann, zum Beispiel in einer U-Form. Hierzu kann der Druckkopf 130 zum Beispiel entlang einer zweiten Druckkopf-Linearführungsstruktur 132 verfahrbar.

Alternativ zu der Druckvorrichtung kann eine jeweilige Baumaterialschicht zum Beispiel mit einem Laser selektiv verfestigt, zum Beispiel gesintert, werden (sogenanntes "selektives Lasersintern").

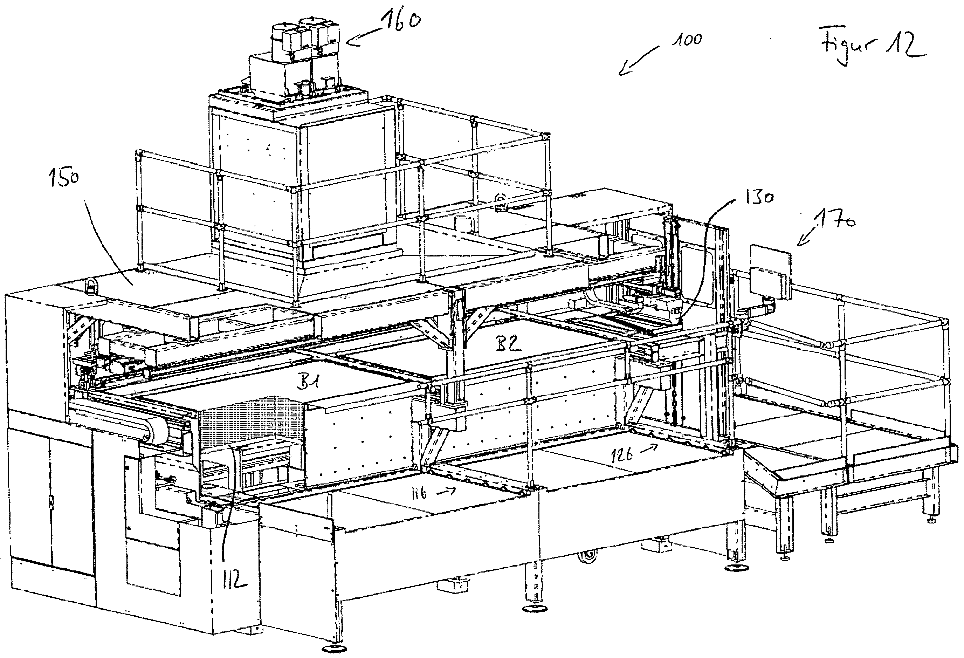

Wie in Figur 11 gezeigt (siehe auch Figur 12), kann der 3D-Drucker 100 zum Beispiel ein oder mehrere Baubereiche B1 und B2 aufweisen (hier beispielgebend zwei), die zum Beispiel von einer jeweiligen Bauplattform 112 (siehe Figur 12) und/oder einer jeweiligen Baubox 110 bzw. 120 definiert werden, wenn diese sich in ihrer Bauposition innerhalb des 3D-Druckers befindet.

Die jeweilige Bauplattform 112 kann zum Beispiel mit einem zugehörigen Hubantrieb (hier beispielgebend mit einem anlagenfesten Hubantrieb 114) höhenverstellbar sein.

Die erste Baubox 110 kann wie gezeigt zum Beispiel über eine erste Rollenbahn 116 in den 3D-Drucker hinein und aus diesem heraus verfahrbar sein, und die zweite Baubox 120 kann zum Beispiel über eine zweite Rollenbahn 126 in den 3D-Drucker hinein und aus diesem heraus verfahrbar sein.

**Figur 12** zeigt den 3D-Drucker 100 aus Figur 11, diesmal mit einem Großteil des Anlagengehäuses 150 sowie mit einer integrierten Beschichter-Beschickungseinheit 160.

Wie in Figur 12 gezeigt, kann der 3D-Drucker 100 zum Beispiel ferner eine in den 3D-Drucker integrierte Beschichter-Beschickungseinheit 160 aufweisen, mit der Baumaterial frisch zubereitbar und in den (jeweiligen) Beschichter zuführbar ist.

Zu erkennen sind zwei Vorratsbehälter, die ein jeweiliges Partikelmaterial speichern und dieses in einen nicht sichtbaren Mischbehälter mit Rührwerk dosiert einspeisen können.

Ein Teil des Anlagengehäuses 150 und der ersten Baubox 100 ist in Figur 12 freigeschnitten, um die Bauplattform 112 und den auf dieser angeordneten Stapel aus Baumaterialschichten sichtbar zu machen.

Die Beschichter 3, 5 sind in Figur 12 nach hinten verfahren, und der Druckkopf 130 befindet rechten vorne.

In Figur 12 ist zudem gut zu erkennen, wie von der ersten Baubox und der zweiten Baubox in dem 3D-Drucker ein erster Baubereich B1 bzw. ein zweiter Baubereich B2 gebildet werden.

Das Bezugszeichen 170 bezeichnet eine gemeinsame Bedienstation.

Die Bezugszeichen 116 und 126 bezeichnen eine jeweilige Zuführvorrichtung, hier beispielgebend in der Form einer Rollenbahn, mit der eine jeweilige Baubox in ihre Baubox-Bauposition innerhalb des 3D-Druckers verfahrbar ist.

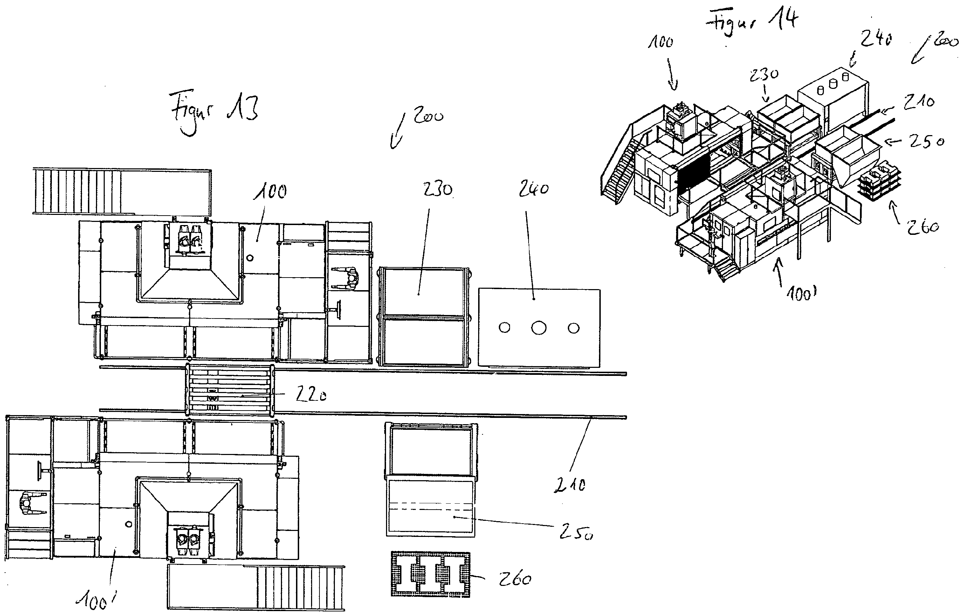

Die **Figuren 13 und 14** zeigen in einer Draufsicht bzw. Perspektivansicht von oben eine 3D-Druckeranordnung 200, welche einen ersten und einen zweiten 3D-Drucker 100 bzw. 100' aufweist.

Die beiden 3D-Drucker können zum Beispiel wie der mit Bezug auf die Figuren 11 und 12 beschriebene 3D-Drucker 100 ausgebildet sein.

Wie in den Figuren 13 und 14 gezeigt, können der erste und der zweite 3D-Drucker 100, 100' benachbart zueinander angeordnet sein, derart, dass sich die Einführöffnungen zum Einführen der Bauboxen gegenüber liegen. Zwischen den beiden 3D-Druckern kann sich zum Beispiel ein Schienensystem 210 erstrecken, entlang welchem eine gemeinsame Transportvorrichtung 220 verfahrbar ist. Die Transportvorrichtung 220 kann von sowohl dem ersten als auch dem zweiten 3D-Drucker 100, 100' genutzt werden, um den jeweiligen 3D-Drucker mit einer oder mehreren Bauboxen zu bestücken.

Ferner können entlang des Schienensystems ein oder mehrere optionale Komponenten angeordnet sein, zum Beispiel ein Baubox-Vorrat 230, in dem ein oder mehrere Bauboxen vorgehalten werden, und/oder ein Mikrowellen-Ofen 240, der eine Baubox aufnehmen kann, um ein darin enthaltenes Bauteil (weiter) auszuhärten, und/oder eine Entpackstation 250, wo ein in der Baubox enthaltenes Bauteil von losem, nicht verfestigtem Partikelmaterial befreit und somit "ausgepackt" werden kann, zum Beispiel automatisiert. Das Bezugszeichen 260 bezeichnet dabei einen optionalen Bauteil-Vorrat, in den ausgepackte Bauteile (hier beispielgebend Gussformen und/oder Gießkerne), die mittels eines generativen Herstellungsverfahrens unter Verwendung eines der beiden 3D-Drucker hergestellt wurden, eingelagert werden können.

Gemäß einer weiteren Ausführungsform kann bei einem generativen Herstellungsverfahren - zum Beispiel unter Verwendung eines wie oben beschrieben ausgebildeten 3D-Druckers und/oder unter Verwendung einer wie oben beschrieben ausgebildeten Beschichteranordnung - in einem ersten Baubereich ein erster Baujob und zeitgleich, d.h. zeitlich überlappend, in einem zweiten Baubereich ein zweiter Baujob durchgeführt werden, wobei der erste Baubereich von einem ersten Beschichter und der zweite Baubereich von einem zweiten Beschichter bedient wird, wobei der erste und der zweite Beschichter zum Beispiel gemeinsam über den ersten bzw. den zweiten Baubereich hinweg bewegt werden, und wobei wenn der erste Baujob beendet ist, eine Ausgabeöffnung zum Ausgeben von Baumaterial des ersten Beschichters mittels einer Schließvorrichtung geschlossen wird. Der erste Baujob kann dabei zum Beispiel weniger zeitintensiv sein als der zweite Baujob.

Gemäß einer weiteren Ausführungsform kann bei einem generativen Herstellungsverfahren - zum Beispiel unter Verwendung eines wie oben beschrieben ausgebildeten 3D-Druckers und/oder unter Verwendung einer wie oben beschrieben ausgebildeten Beschichteranordnung - ein Beschichter wiederholt über einen zugehörigen Baubereich hinweg bewegt wird, um partikelförmiges Baumaterial in Form einer gleichmäßigen Schicht auf den Baubereich auszugeben,
wobei eine Ausgabe-Öffnung des Beschichters während einer beschichtungsfreien Fahrt, zum Beispiel
beschichtungsfreie Rückfahrt eines unidirektionalen Beschichters, und/oder während einem beschichtungsfreien Fahrtabschnitt, zum Beispiel
Vorlauf- und/oder Nachlauffahrtabschnitt, und/oder in einer Ruheposition des Beschichters und/oder bei/nach Beendigung und/oder Unterbrechung eines Baujobs und/oder für eine Reinigung des Beschichters
zumindest zeitweise mittels einer an dem Beschichter angebrachten Schließvorrichtung geschlossen wird.

Gemäß einer weiteren Ausführungsform kann bei einem Beschichter-Reinigungsverfahren - zum Beispiel unter Verwendung eines wie oben beschrieben ausgebildeten 3D-Druckers und/oder unter Verwendung einer wie oben beschrieben ausgebildeten Beschichteranordnung - ein Beschichter eines 3D-Druckers zu einer Reinigungsstation verfahren werden, um den Beschichter zu reinigen, wobei eine Ausgabeöffnung des Beschichters während einer Reinigung des Beschichters, zum Beispiel von einem Streichelement desselben, zumindest zeitweise mittels einer an dem Beschichter angebrachten Schließvorrichtung geschlossen wird.

Der 3D-Drucker kann hierzu zum Beispiel eine integrierte Reinigungsstation aufweisen, in der der Beschichter, zum Beispiel das mindestens eine Streichelement desselben, abgebürstet werden kann. Ansonsten kann der 3D-Drucker zum Beispiel wie oben beschrieben ausgebildet sein.

## Patentansprüche

1. Beschichteranordnung (1) für einen 3D-Drucker (100), aufweisend:
einen Beschichter (3) mit einem Behälter (17), der länglich ausgebildet ist und einen inneren Hohlraum zur Aufnahme von partikelförmigem Baumaterial definiert, der in einer Öffnung zum Ausgeben des partikelförmigen Baumaterials mündet, welche als Längsschlitz ausgebildet ist, und
eine Schließvorrichtung (31), die eingerichtet ist, um die Öffnung zum Ausgeben des partikelförmigen Baumaterials selektiv zu verschließen,
wobei die Schließvorrichtung (31) mindestens ein an dem Beschichter (3) angebrachtes Schließelement (31 a) aufweist, das eine längliche Gestalt hat und eingerichtet ist, um die Öffnung selektiv zumindest teilweise in Folge einer seitlichen Bewegung und/oder Verformung zu verdecken, **dadurch gekennzeichnet, dass** das mindestens eine Schließelement (31 a) von einem Hohlkörper gebildet ist, dessen innerer Hohlraum (33) von einem verformbaren Abschnitt (35) begrenzt ist, wobei der Hohlkörper eingerichtet ist, um von einem dem Hohlkörper zugeführten Druckfluid unter einer Expansion des inneren Hohlraums an dem verformbaren Abschnitt nach außen hin verformt zu werden, um dadurch die Öffnung zumindest teilweise zu verdecken.

2. Beschichteranordnung (1) nach Anspruch 1,
wobei der Beschichter (3) in horizontaler Richtung verfahrbar ist und sich die Längsachse des Behälters (17) und/oder die Längsachse des Längsschlitzes in einer horizontalen Richtung erstrecken, die senkrecht zu der Richtung ist, in der der Beschichter (3) verfahrbar ist, und/oder
wobei sich die Längsachse des mindestens einen Schließelements (31 a) im Wesentlichen parallel zu der Längserstreckung des Schlitzes erstreckt und das mindestens eine Schließelement (31 a) senkrecht zu seiner Längsachse bewegbar und/oder verformbar und/oder expandierbar ist.

3. Beschichteranordnung (1) nach Anspruch 1 oder 2, wobei das mindestens eine Schließelement (31 a) unterhalb der Öffnung angeordnet ist.

4. Beschichteranordnung (1) nach einem der Ansprüche 1 bis 3, wobei
der Beschichter (3) ferner mindestens ein Streichelement (15a) aufweist, das eingerichtet ist, um aus der Öffnung ausgegebenes Baumaterial zu überstreichen, um dadurch das ausgegebene Partikelmaterial zu nivellieren und/oder zu verdichten, und
das mindestens eine Schließelement (31 a) oberhalb des mindestens einen Streichelements angeordnet ist.

5. Beschichteranordnung (1) nach einem der Ansprüche 1 bis 4, wobei das mindestens eine Schließelement (31 a) eine Dichtfläche aufweist, die eingerichtet ist, um in einem Schließzustand der Schließvorrichtung an einer Gegenfläche abzudichten, und wobei die Dichtfläche aus einem nachgiebigen Material gebildet ist.

6. Beschichteranordnung (1) nach einem der Ansprüche 1 bis 5, wobei die Schließvorrichtung (31) einen ersten und einen zweiten Hohlkörper (31 a, 31 b) aufweist, wobei jeder der beiden Hohlkörper einen inneren Hohlraum (33) hat, der von einem verformbaren Abschnitt (35) begrenzt ist, wobei die beiden Hohlkörper derart auf einander gegenüberliegenden Seiten der Öffnung angeordnet sind, dass die verformbaren Abschnitte einander zugewandt sind, und wobei jeder der beiden Hohlkörper eingerichtet ist, um von einem zugeführten Druckfluid unter einer Expansion des inneren Hohlraums an dem verformbaren Abschnitt nach außen hin verformt zu werden, so dass die beiden verformbaren Abschnitt aufeinander zu bewegbar und miteinander in Kontakt bringbar sind, um hierdurch die Öffnung zu verschließen.

7. Beschichteranordnung (1) nach einem der Ansprüche 1 bis 6, wobei der verformbare Abschnitt (35) bei freigegebener Öffnung einwärts gewölbt ist und zum Schließen der Öffnung von einem dem Hohlkörper zugeführten Druckfluid nach außen wölbbar ist.

8. Beschichteranordnung (1) nach einem der Ansprüche 1 bis 7, wobei die Schließvorrichtung (31) ferner aufweist:
eine Fluidleitungsstruktur (F), über die der jeweilige Hohlkörper (31 a) mit einer Druckfluidquelle (P, V) in Fluidverbindung steht.

9. Beschichteranordnung (1) nach einem der Ansprüche 1 bis 8, wobei die Schließvorrichtung (31) ferner aufweist:
eine Steuereinheit (C), die eingerichtet ist, um die Öffnung mittels des mindestens einen Schließelements (31 a) gesteuert selektiv zu schließen,
wobei optional die Steuereinheit (C) mit der Druckfluidquelle (P, V) aus Anspruch 8 in Verbindung steht und eingerichtet ist, um diese für ein Schließen der Öffnung derart anzusteuern, dass die Druckfluidquelle Druckfluid in den Hohlkörper (31 a) einspeist, so dass dieser an seinem verformbaren Abschnitt (35) verformt wird.

10. Beschichteranordnung (1) nach einem der vorangehenden Ansprüche, mit einer Mehrzahl von Beschichtern (3, 5) und einer korrespondierenden Mehrzahl von Schließvorrichtungen, so dass die Öffnung eines jeweiligen Beschichters unabhängig und selektiv verschließbar ist, wobei optional die Beschichter (3, 5) gemeinsam über ein jeweils zugehöriges Baufeld hinweg verfahrbar sind.

11. Beschichteranordnung (1) nach einem der vorangehenden Ansprüche, ferner aufweisend eine Steuereinheit (C), zum Beispiel die Steuereinheit nach Anspruch 9 oder 10, die eingerichtet ist, um
die Schließvorrichtung (31) zu schließen, wenn der dem Beschichter (3) zugeteilte Baujob beendet und/oder unterbrochen ist, und/oder
von den Beschichtern (3, 5) aus Anspruch 10die Öffnung desjenigen Beschichters, dessen Baujob zuerst beendet ist, mittels seiner zugehörigen Schließvorrichtung zu schließen, und/oder
während einer beschichtungsfreien Fahrt, zum Beispiel beschichtungsfreie Rückfahrt eines unidirektionalen Beschichters, die Schließvorrichtung (31) des Beschichters (3) zu schließen und/oder
während einem beschichtungsfreien Fahrtabschnitt, zum Beispiel Vorlauf- und/oder Nachlauffahrtabschnitt, die Schließvorrichtung (31) des Beschichters (3) zu schließen und/oder
in einer Ruheposition des Beschichters (3) die Schließvorrichtung (31) des Beschichters zu schließen und/oder
die Schließvorrichtung (31) des Beschichters (3) für eine Reinigung des Beschichters zu schließen.

12. 3D-Drucker (100), aufweisend eine Beschichteranordnung (1) nach einem der vorangehenden Ansprüche.

13. Generatives Herstellungsverfahren, bei dem in einem ersten Baubereich (B1) ein erster Baujob und zeitgleich in einem zweiten Baubereich (B2) ein zweiter Baujob durchgeführt wird, wobei der erste Baubereich von einem ersten Beschichter (3) und der zweite Baubereich von einem zweiten Beschichter (5) bedient wird, wobei der erste und der zweite Beschichter gemeinsam über den ersten bzw. den zweiten Baubereich hinweg bewegt werden, wobei wenn der erste Baujob beendet ist, eine Ausgabeöffnung zum Ausgeben von Baumaterial des ersten Beschichters mittels einer Schließvorrichtung (31) nach einem der Ansprüche 1 bis 11 geschlossen wird, wobei der erste Baujob weniger zeitintensiv ist als der zweite Baujob, und wobei der zweite Baujob nach Erledigung des ersten Baujobs noch fertiggestellt wird und während dieser Zeit der erste Beschichter weiter über seinen zugehörigen Baubereich zusammen mit dem zweiten Beschichter verfahren wird, jedoch ohne Baumaterial auszugeben.

14. Generatives Herstellungsverfahren,
bei dem ein Beschichter (3) über einen zugehörigen Baubereich (B1) hinweg bewegt wird, um partikelförmiges Baumaterial in Form einer gleichmäßigen Schicht auf den Baubereich auszugeben,
wobei eine Ausgabe-Öffnung des Beschichters
während einer beschichtungsfreien Fahrt, zum Beispiel beschichtungsfreie Rückfahrt eines unidirektionalen Beschichters, und/oder
während einem beschichtungsfreien Fahrtabschnitt, zum Beispiel Vorlauf- und/oder Nachlauffahrtabschnitt, und/oder
in einer Ruheposition des Beschichters und/oder
bei/nach Beendigung und/oder Unterbrechung eines Baujobs und/oder für eine Reinigung des Beschichters
zumindest zeitweise mittels einer an dem Beschichter angebrachten Schließvorrichtung (31) nach einem der Ansprüche 1 bis 11 geschlossen wird.

15. Beschichter-Reinigungsverfahren, bei dem ein Beschichter (3) eines 3D-Druckers zu einer Reinigungsstation verfahren wird, um den Beschichter zu reinigen, wobei eine Ausgabeöffnung des Beschichters während einer Reinigung des Beschichters, zum Beispiel von einem Streichelement desselben, zumindest zeitweise mittels einer an dem Beschichter angebrachten Schließvorrichtung (31) nach einem der Ansprüche 1 bis 11 geschlossen wird.

## Claims

1. Coating device arrangement (1) for a 3D printer (100), comprising:
a coating device (3) having a container (17) which is formed to be elongate and which defines an inner cavity for receiving particulate construction material, which leads to an opening for outputting the particulate construction material, which is formed as an elongate slot, and
a closing device (31) configured to selectively close the opening for outputting the particulate construction material,
wherein the closing device (31) comprises at least one closing member (31a) attached to the coating device (3), which is elongate in shape and which is configured to selectively cover the opening at least in part as a result of a lateral movement and/or deformation, **characterized in that**
the at least one closing member (31a) is formed by a hollow body, the inner cavity (33) of which is limited by a deformable portion (35), the hollow body being configured to be deformed outward by a pressure fluid supplied to the hollow body, thereby expanding the inner cavity, to thereby cover the opening at least in part.

2. Coating device arrangement (1) according to claim 1,
wherein the coating device (3) is displaceable in a horizontal direction and the longitudinal axis of the container (17) and/or the longitudinal axis of the longitudinal slot extend in a horizontal direction which is perpendicular to the direction in which the coating device (3) is displaceable, and/or
wherein the longitudinal axis of the at least one closing member (31a) extends substantially parallel to the longitudinal extension of the slot, and the at least one closing member (31a) is displaceable and/or deformable and/ or expandable perpendicularly to its longitudinal axis.

3. Coating device arrangement (1) according to claim 1 or 2, wherein the at least one closing member (31a) is arranged underneath the opening.

4. Coating device arrangement (1) according to any one of claims 1 to 3, wherein
the coating device (3) further comprises at least one stroking member (15a) which is configured to stroke construction material output from the opening, to thereby level and/or compress the output particulate material, and
the at least one closing member (31a) is arranged above the at least one stroking member.

5. Coating device arrangement (1) according to any one of claims 1 to 4, wherein the at least one closing member (31a) comprises a sealing surface configured to seal on a counter surface in a closing state of the closing device, and wherein the sealing surface is made of a flexible material.

6. Coating device arrangement (1) according to any one of claims 1 to 5, wherein the closing device (31) comprises a first and a second hollow body (31a, 31b), wherein each of the two hollow bodies has an inner cavity (33) which is limited by a deformable portion (35), wherein the two hollow bodies are arranged on opposite sides of the opening in such a way that the deformable portions face each other, and wherein each of the two hollow bodies is configured to be deformed outward at the deformable portion by a supplied pressure fluid, thereby expanding the inner cavity, so that the two deformable portions can be moved toward each other and can be brought into contact, to thereby close the opening.

7. Coating device arrangement (1) according to any one of claims 1 to 6, wherein the deformable portion (35) is inwardly curved with the opening being uncovered, and is able to curve outwardly by a pressure fluid supplied to the hollow body to close the opening.

8. Coating device arrangement (1) according to any one of claims 1 to 7, wherein the closing device (31) further comprises:
a fluid line structure (F) through which the respective hollow body (31a) is in fluid connection with a pressure fluid source (P, V).

9. Coating device arrangement (1) according to any one of claims 1 to 8, wherein the closing device (31) further comprises:
a control unit (C) configured to selectively close the opening in a controlled way by means of the at least one closing member (31a),
wherein optionally the control unit (C) is connected to the pressure fluid source (P, V) of claim 8 and is configured to control it for closing the opening in such a way that the pressure fluid source supplies pressure fluid into the hollow body (31a), so that the hollow body is deformed at its deformable portion (35).

10. Coating device arrangement (1) according to any one of the preceding claims, having a plurality of coating devices (3, 5) and a corresponding plurality of closing devices, so that the opening of a respective coating device can be closed independently and selectively, wherein optionally the coating devices (3, 5) are movable across a respectively associated construction field together.

11. Coating device arrangement (1) according to any one of the preceding claims, further comprising a control unit (C), for example the control unit according to claim 9 or 10, which is configured to
close the closing device (31) if the construction job assigned to the coating device (3) is finished and/or interrupted, and/or
to close the opening of the coating device amongst the coating devices (3, 5) according to claim 10, the construction job of which is finished first, by means of its associated closing device, and/or
to close the closing device (31) of the coating device (3) during a coating-free journey, for example a coating-free return journey of a unidirectional coating device, and/or
to close the closing device (31) of the coating device (3) during a coating-free travel phase, for example an advance and/or follow-up travel phase, and/or
to close the closing device (31) of the coating device in a standstill position of the coating device (3), and/or
to close the closing device (31) of the coating device (3) for cleaning the coating device.

12. 3D printer (100), comprising a coating device arrangement (1) according to any one of the preceding claims.

13. Generatives manufacturing process, in which a first construction job is carried out in a first construction area (B1) and, at the same time, a second construction job is carried out in a second construction area, wherein the first construction area is served by a first coating device (3) and the second construction area is served by a second coating device (5), wherein the first and the second coating device are moved together across the first and second construction area, respectively, wherein, if the first construction job is finished, an output opening for outputting construction material of the first coating device is closed by means of a closing device (31) according to any one of claims 1 to 11, wherein the first construction job is less time-consuming than the second construction job, and wherein the second construction job is completed on completion of the first construction job, and during which time the first coating device is further moved across its associated construction area together with the second coating device, without, however, outputting construction material.

14. Generative manufacturing process,
in which a coating device (3) is moved across an associated construction area (B1), to output particulate construction material in the form of a uniform layer onto the construction area,
wherein an output opening of the coating device is closed at least temporarily by means of a closing device (31) according to any one of claims 1 to 11 attached to the coating device,
during a coating-free journey, for example during a coating-free return journey of a unidirectional coating device, and/or
during a coating-free travel phase, for example an advance and/or follow-up travel phase, and/or
in a standstill position of the coating device, and/or
upon/after termination and/or interruption of a construction job, and/or
for cleaning the coating device.

15. Coating device cleaning method, wherein a coating device (3) of a 3D printer is moved to a cleaning station to clean the coating device, wherein an output opening of the coating device is closed during a cleaning process of the coating device, for example of a stroking member thereof, at least temporarily by means of a closing device (31) according to any one of claims 1 to 11, attached to the coating device.

## Revendications

1. Dispositif de revêtement (1) pour une imprimante 3D (100) comprenant :
une coucheuse (3) avec un récipient (17), qui présente une forme allongée et qui définit un espace creux interne pour le logement d'un matériau de construction particulaire, qui débouche dans une ouverture pour la distribution du matériau de construction particulaire, qui présente la forme d'une fente longitudinale et
un dispositif de fermeture (31) qui est conçu pour fermer sélectivement l'ouverture de distribution du matériau de construction particulaire,
le dispositif de fermeture (31) comprenant au moins un élément de fermeture (31 a), monté sur la coucheuse (3), qui présente une forme allongée et qui est conçu pour recouvrir sélectivement l'ouverture au partiellement à la suite d'un déplacement et/ou d'une déformation latérale,
**caractérisé en ce que**
l'au moins un élément de fermeture (31 a) est constitué d'un corps creux dont l'espace creux interne (33) est limité par une portion déformable (35), le corps creux étant conçu pour être déformé vers l'extérieur, au niveau de la portion déformable, par un fluide sous pression introduit dans le corps creux, qui provoque la dilatation de l'espace creux interne, afin de recouvrir au moins partiellement l'ouverture.

2. Dispositif de revêtement (1) selon la revendication 1,
la coucheuse (3) étant mobile dans la direction horizontale et l'axe longitudinal du récipient (17) et/ou l'axe longitudinal de la fente longitudinale s'étendent dans une direction horizontale, qui est mobile perpendiculairement à la direction dans laquelle la coucheuse (3) est mobile et/ou
l'axe longitudinal de l'au moins un élément de fermeture (31a) s'étend globalement parallèlement à l'extension longitudinale de la fente et l'au moins un élément de fermeture (31 a) étant mobile et/ou déformable et/ou dilatable perpendiculairement à son axe longitudinal.

3. Dispositif de revêtement (1) selon la revendication 1 ou 2, l'au moins un élément de fermeture (31 a) étant disposé en dessous de l'ouverture.

4. Dispositif de revêtement (1) selon l'une des revendications 1 à 3,
la coucheuse (3) comprenant en outre au moins un élément de badigeonnage (15a) qui est conçu pour badigeonner le matériau de construction distribué par l'ouverture, afin de niveler et/ou de comprimer ainsi le matériau particulaire distribué et
l'au moins un élément de fermeture (31a) étant disposé au-dessus de l'au moins un élément de badigeonnage.

5. Dispositif de revêtement (1) selon l'une des revendications 1 à 4, l'au moins un élément de fermeture (31a) présentant une surface d'étanchéité qui est conçue pour étanchéifier, dans un état de fermeture du dispositif de fermeture contre une contre-surface et la surface d'étanchéité étant constituée d'un matériau flexible.

6. Dispositif de revêtement (1) selon l'une des revendications 1 à 5, le dispositif de fermeture (31) comprenant un premier et un deuxième corps creux (31 a, 31 b), chacun des deux corps creux comprenant un espace creux interne (33), qui est délimité par une portion déformable (35), les deux corps creux étant disposés sur des côtés opposés de l'ouverture de façon à ce que les portions déformables soient orientées l'une vers l'autre et chacun des deux corps creux étant conçu pour être déformé vers l'extérieur par un fluide sous pression introduit, sous l'effet d'une dilatation de l'espace creux interne au niveau de la portion déformable, de façon à ce que les deux portions déformables soient mobiles l'une vers l'autre et puissent être mises en contact entre elles afin de fermer l'ouverture.

7. Dispositif de revêtement (1) selon l'une des revendications 1 à 6, la portion déformable (35) étant incurvée vers l'intérieur lorsque l'ouverture est dégagée et pouvant être incurvée vers l'extérieur, pour la fermeture de l'ouverture, par un fluide sous pression introduit dans le corps creux.

8. Dispositif de revêtement (1) selon l'une des revendications 1 à 7, le dispositif de fermeture (31) comprenant en outre :
une structure de conduite de fluide (F) par l'intermédiaire de laquelle le corps creux (31 a) correspondant est reliée de manière fluidique avec une source de fluide sous pression (P, V).

9. Dispositif de revêtement (1) selon l'une des revendications 1 à 8, le dispositif de fermeture (31) comprenant en outre :
une unité de commande (C), qui est conçue pour fermer sélectivement, de manière contrôlée, l'ouverture au moyen de l'au moins un élément de fermeture (31 a),
en option, l'unité de commande (C) étant relié avec la source de fluide sous pression (P, V) selon la revendication 8 et étant conçu pour contrôler celle-ci pour une fermeture de l'ouverture de façon à ce que la source de fluide sous pression introduise du fluide sous pression dans le corps creux (31 a), de façon à ce que celui-ci soit déformé au niveau de sa portion déformable (35).

10. Dispositif de revêtement (1) selon l'une des revendications précédentes, avec une pluralité de coucheuses (3, 5) et un nombre correspondant de dispositifs de fermeture, de façon à ce que l'ouverture d'une coucheuse correspondante puisse être fermée indépendamment et de manière sélective, les coucheuses (3, 5) étant, en option, mobiles ensemble sur un champ de construction correspondant.

11. Dispositif de revêtement (1) selon l'une des revendications précédentes, comprenant en outre une unité de commande (C), par exemple l'unité de commande selon la revendication 9 ou 10, qui est conçu pour
fermer le dispositif de fermeture (31) lorsque la tâche de construction allouée à la coucheuse (3) est terminée et/ou interrompue et/ou
fermer, par les coucheuses (3, 5) selon la revendication 10, l'ouverture de la coucheuse, dont la tâche de construction est terminée en premier, au moyen de son dispositif de fermeture correspondant et/ou
pendant un trajet sans revêtement, par exemple un trajet en marche arrière sans revêtement d'une coucheuse unidirectionnelle, fermer le dispositif de fermeture (31) de la coucheuse (3) et/ou
pendant une partie de trajet sans revêtement, par exemple une partie de trajet de pré-traitement et/ou de post-traitement d'une coucheuse unidirectionnelle, fermer le dispositif de fermeture (31) de la coucheuse (3) et/ou
dans une position de repos de la coucheuse (3), fermer le dispositif de fermeture (31) de la coucheuse et/ou
fermer le dispositif de fermeture (31) de la coucheuse (3) pour un nettoyage de la coucheuse.

12. Imprimante 3D (100), comprenant un dispositif de revêtement (1) selon l'une des revendications précédentes.

13. Procédé de fabrication additive, dans lequel, dans une première zone de construction (B1), une première tâche de construction est effectuée et simultanément, dans une deuxième zone de construction (B2), une deuxième tâche de construction est effectuée, la première zone de construction étant desservie par une première coucheuse (3) et la deuxième zone de construction étant desservie par une deuxième coucheuse (5), la première et la deuxième coucheuses étant déplacée ensemble au-dessus de la première ou de la deuxième zone de construction, moyennant quoi, lorsque la première tâche de construction est terminée, une ouverture de distribution de matériau de construction de la première coucheuse étant fermée au moyen d'un dispositif de fermeture (31) selon l'une des revendications 1 à 11, la première tâche de construction nécessitant moins de temps que la deuxième tâche de construction et la deuxième tâche de construction étant continuée après la fin de la première tâche de construction et, pendant ce temps, la première coucheuse est déplacée plus loin au-dessus de sa zone de construction correspondante, ensemble avec la deuxième coucheuse, mais sans distribuer de matériau de construction.

14. Procédé de fabrication additive,
dans lequel une coucheuse (3) est déplacée au-dessus d'une zone de construction (B1) correspondante afin de distribuer un matériau de construction particulaire sous la forme d'une couche uniforme sur la zone de construction,
une ouverture de distribution de la coucheuse étant fermée
pendant un trajet sans revêtement, par exemple un trajet en marche arrière sans revêtement d'une coucheuse unidirectionnelle et/ou
pendant une partie de trajet sans revêtement, par exemple une partie de trajet de pré-traitement et/ou de post-traitement et/ou
dans une position de repos de la coucheuse et/ou
à la fin et/ou après la fin et/ou lors d'une interruption d'une tâche de construction et/ou pour un nettoyage de la coucheuse
au moins temporairement au moyen d'un dispositif de fermeture (31), monté sur la coucheuse, selon l'une des revendications 1 à 11.

15. Procédé de nettoyage de coucheuse, dans lequel une coucheuse (3) d'une imprimante 3D est déplacée vers une station de nettoyage afin de nettoyer la coucheuse, une ouverture de distribution de la coucheuse étant fermée au moins temporairement au moyen d'un dispositif de fermeture (31), selon l'une des revendications 1 à 11, monté sur la coucheuse, pendant un nettoyage de la coucheuse, par exemple d'un élément de badigeonnage de celle-ci.
